Europäisches Patentamt

European Patent Office

Office européen des brevets

(19)

(11) Veröffentlichungsnummer: **0 356 547 B1**

## EUROPÄISCHE PATENTSCHRIFT

(12)

(45) Veröffentlichungstag der Patentschrift: **04.11.92**

(51) Int. Cl.⁵: **H02M 7/527**

(21) Anmeldenummer: **88114137.8**

(22) Anmeldetag: **30.08.88**

(54) **Verfahren zum Betrieb eines Dreipunktwechselrichters.**

(43) Veröffentlichungstag der Anmeldung:
**07.03.90 Patentblatt 90/10**

(45) Bekanntmachung des Hinweises auf die
Patenterteilung:
**04.11.92 Patentblatt 92/45**

(84) Benannte Vertragsstaaten:
**AT BE CH DE FR GB IT LI SE**

(56) Entgegenhaltungen:

**PESC'88 RECORD, 19th ANNUAL IEEE PO-
WER ELECTRONICS SPECIALISTS CONFE-
RENCE, vol. 1, Kyoto, Japan, 11-14 April 1988
Seite 1255 - 1262; B. VELAERTS et al: "A
novel approach to the generation and optimization of three-level PWM wave forms"**

**ANTRIEBSTECHNIK 27 no. 4, 1988, Seite 38 -
42; M.W. GEKELER: "Raumzeiger-Modulation
bei Frequenzumrichtern"**

(73) Patentinhaber: **SIEMENS AKTIENGESELL-
SCHAFT
Wittelsbacherplatz 2
W-8000 München 2(DE)**

(72) Erfinder: **Heining, Hans-Dieter, Dipl.-Ing.
Katzwanger Hauptstrasse 103a
W-8500 Nürnberg 60(DE)**
Erfinder: **Braun, Michael, Dr.-Ing.
Ric.-Huch-Strasse 15
W-8520 Erlangen(DE)**

EP 0 356 547 B1

## Beschreibung

Die Erfindung betrifft ein Verfahren zum Betrieb eines Dreipunktwechselrichters mit den im Oberbegriff von Anspruch 1 enthaltenen Merkmalen.

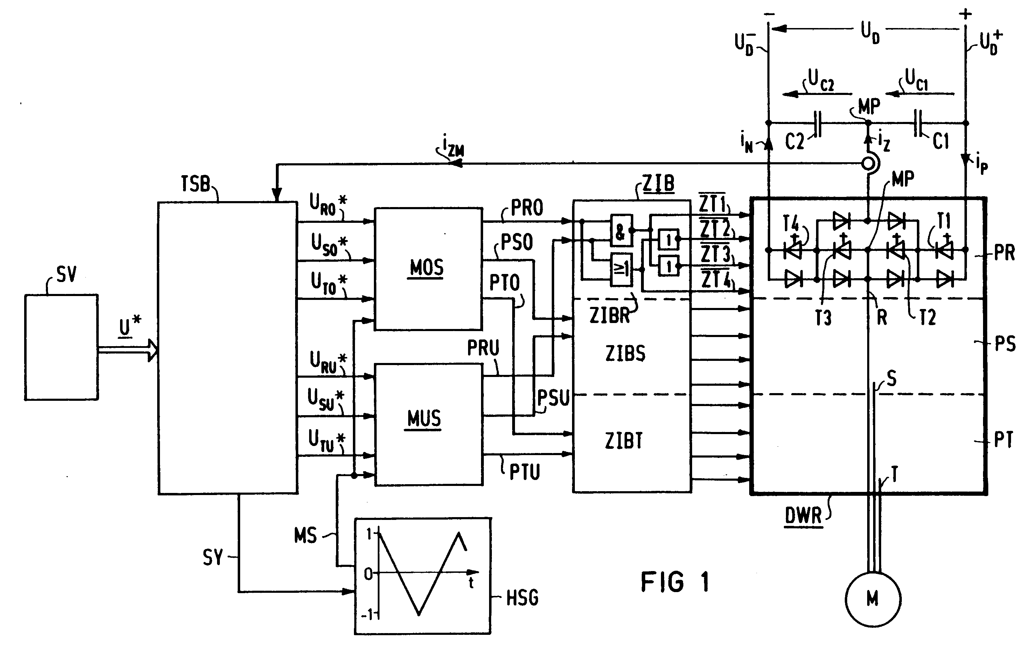

Ein Dreipunktwechselrichter hat bekanntlich gegenüber einem Zweipunktwechselrichter den Vorteil, daß zur Nachbildung von annähernd sinusförmigen Spannungsverläufen am Wechselrichterausgang drei Gleichspannungspotentiale zur Verfügung stehen. So werden die Phasen PR, PS, PT eines in der FIG 1 beispielhaft dargestellten Dreipunktwechselrichters DWR sowohl vom positiven bzw. negativen Potential $U_D^+$ bzw. $U_D^-$ einer Gleichspannungsquelle $U_D$ gespeist, als auch von einem bevorzugt dem Nullpotential entsprechenden Mittenpotential MP. In der speziellen Ausführungsform von FIG 1 wird dieser Mittenpotentialanschluß MP als sogenannter "fliegender Nullpunkt" am Verbindungspunkt zweier von der Gleichspannungsquelle $U_D$ gespeister Zwischenkreiskondensatoren C1, C2 am Eingang des Dreipunktwechselrichters DWR zur Verfügung gestellt. In einer anderen Ausführungsform ist es auch möglich, die Potentiale $U_D^+$ , MP und $U_D^-$ mittels eines entsprechend aufgebauten Wechselstromtransformators mit nachgeschalteten Gleichrichteranordnungen für die auf das Mittenpotential MP bezogenen Potentiale $U_D^+$ und $U_D^-$ zu bilden.

Zur Bildung von näherungsweise sinusförmigen Spannungsverläufen an den Ausgängen R, S, T der Phasen PR, PS, RT werden diese drei Potentiale von den Schaltelementen in jeder Phase des Dreipunktwechselrichters für bestimmte Zeiten an den jeweiligen Ausgang durchgeschaltet. In der in der FIG 1 beispielhaft dargestellten Phase PR sind dies die mit antiparallelen Freilaufdioden versehenen und in Reihe zwischen dem positiven Potential $U_D^+$ und dem negativen Potential $U_D^-$ angeordneten Schaltelemente T1 bis T4.

Diese Reihenanordnung ist an den Verbindungspunkten zwischen T1 und T2 bzw. T3 und T4 über zwei Ankoppeldioden mit dem Mittenpotentialanschluß MP der Gleichspannungsquelle verbunden.

Insbesondere bei der Speisung von Drehstrommaschinen mit Hilfe von frequenzsteuerbaren Umrichtern ist es besonders vorteilhaft, die durch den Umrichter in der elektrischen Maschine hervorgerufenen elektrischen Größen, insbesondere die Spannungen und Ströme, in Form von Raumzeigern in einem auf den Stator der elektrischen Maschine bezogenen, rechtwinkligen $\alpha,\beta$-Koordinatensystem darzustellen. In der Veröffentlichung "Raumzeiger-Modulation bei Frequenzumrichtern", Antriebstechnik 27 (1988) Nr. 4, S.38 bis 42 wird diese Methode der Raumzeigerdarstellung und die sich hieraus mit Hilfe des bekannten "Unterschwingungsverfahrens" zum Betrieb eines Wechselrichters ergebende "Raumzeiger-Modulation" am Beispiel einer von einem Zweipunktwechselrichter gespeisten Asynchronmaschine kurz dargestellt.

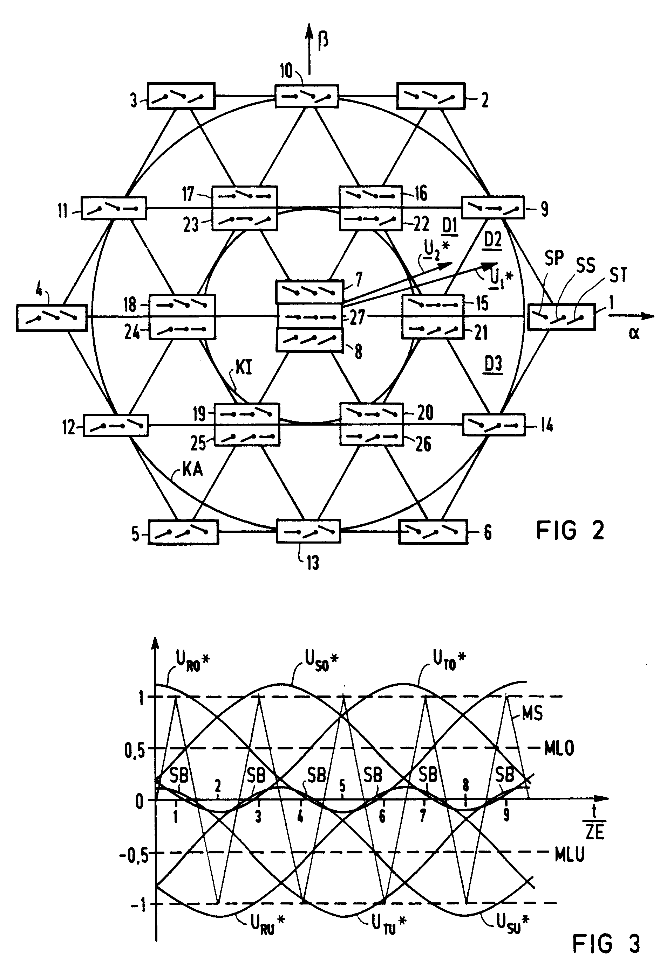

Aufgrund der begrenzten Anzahl von möglichen Schaltzustandskombinationen der Ventile im Wechselrichter kann der Spannungs-Raumzeiger zunächst nur diskrete Lagen im $\alpha,\beta$-Koordinatensystem einnehmen. In der FIG 2 ist ein derartiges Koordinatensystem beispielhaft dargestellt. Die Spitzen der diskreten, zulässigen Lagen der von einem Dreipunkt-Wechselrichter erzeugbaren Spannungs-Raumzeiger $\overline{U}^*$ sind dabei durch Rechtecke markiert, welche mit den Zahlen 1 bis 27 gekennzeichnet sind und in deren Inneren der zur Erzeugung der jeweiligen Lage notwendige Schaltzustand des Dreipunktwechselrichters bildlich dargestellt ist. Dabei sind im Inneren eines jeden Rechteckes drei, die Phasen eines dreiphasigen Dreipunktwechselrichters symbolisierende Schalter dargestellt, welche jeweils drei Schaltzustände einnehmen können. Zeigt ein derartiger "Phasenschalter" nach oben, so ist beispielsweise durch Einschalten der Ventile T1 und T2 in der Phase PR das Potential $U_D^+$ an den Ausgang R gelegt. Liegt dagegen der Phasenschalter waagerecht, so ist durch Einschalten der Ventile T2 und T3 das Mittenpotential MP an den Ausgang R geschaltet. Zeigt schließlich ein derartiger Phasenschalter nach unten, so ist beispielsweise durch Einschalten der Ventile T3 und T4 das Potential $U_D^-$ an den jeweiligen Phasenausgang gelegt. Zur Erzeugung eines Spannungs-Raumzeigers mit der Lage 1 muß somit der Phasenschalter SP für die Phase PR nach oben, und die beiden Phasenschalter SS, ST für die Phasen PS, PT nach unten zeigen. In diesem Fall ist folglich das Potential $U_D^+$ an den Ausgang R der Phase PR, und das Potential $U_D^-$ an die Ausgänge S,T der Phasen PS, PT geschaltet. Der Darstellung in FIG 2 ist desweiteren zu entnehmen, daß einige Schaltzustände äquivalent sind, d.h. denselben Spannungsraumzeiger im $\alpha,\beta$-Koordinatensystem hervorrufen. So erzeugen z.B. die Schaltzustände 16 und 22 denselben, um 60° gegenüber der $\alpha$-Koordinatenachse verdrehten Spannungs-Raumzeiger.

Häufig ist es notwendig auch Spannungsraumzeiger zu erzeugen, welche nicht mit den oben beschriebenen diskreten Lagen übereinstimmen und somit im Inneren der durch die diskreten Schaltzustände 1 bis 27 im $\alpha,\beta$-Koordinatensystem aufgespannten gleichschenkeligen Dreiecke liegen. Hierzu wird mit Hilfe des als "Unterschwingungsverfahren" bekannten Pulsmodulationsverfahren zyklisch mit einem bestimmten Schaltverhältnis zwischen diskreten Raumzeigerlagen hin- und hergeschaltet. Dies wird auch als "Raumzeiger-Modulation" bezeichnet. So ist es möglich, zur Erzeugung des in der FIG 2 eingetragenen Raumzeigers $U_1^*$ beispielsweise zyklisch zwischen den Schaltzuständen 1, 9, 16, 22, 15, 21 und 14 hin- und herzuschalten. Durch eine derartige Überlagerung von diskreten Raumzeigerlagen kann somit im zeitlichen Mittel jede beliebige Raumzeigerzwischenlage approximiert werden.

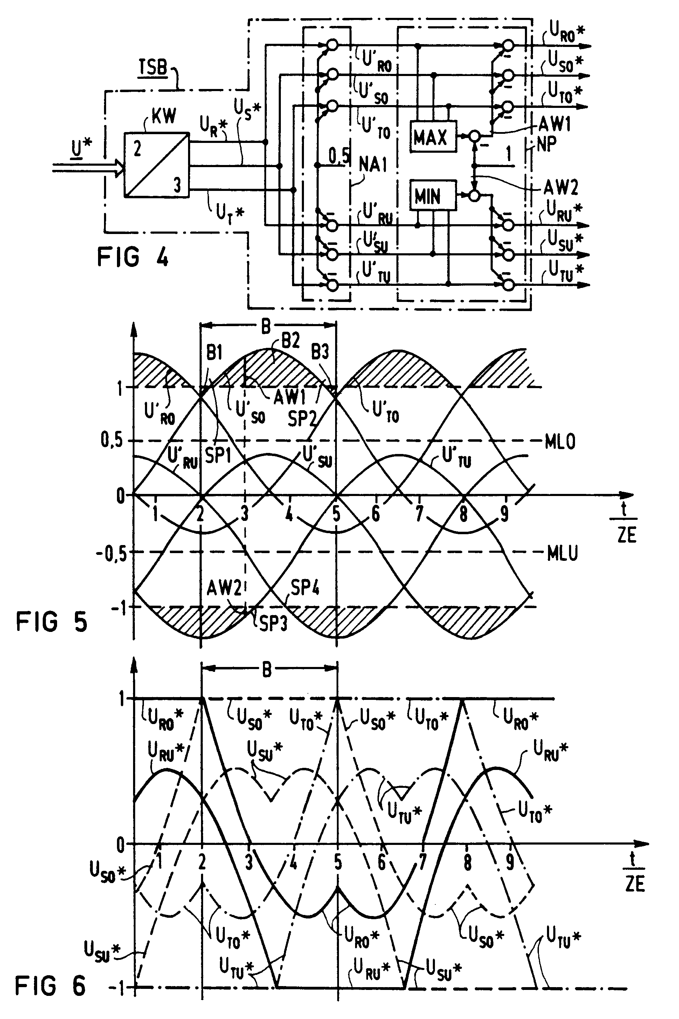

Aus der Veröffentlichung "A novel approach to the generation and optimization of three-level PWM wave forms", PESC '88 Record, IEEE, April 1988, Seiten 1255 bis 1262 ist insbesondere aufgrund der dortigen FIG 5 eine besondere Form der Raumzeiger-Modulation für Dreipunktwechselrichter bekannt, welche desweiteren als Zweifachmodulation bezeichnet wird. Hierbei dient entsprechend dem bekannten Unterschwingungsverfahren ein aus Geradenstücken zusammengesetzter periodischer Verlauf als ein Modulationssignal, dessen Maxima und Minima eine bevorzugt normierte obere und untere Abtastgrenze vorgeben. Die FIG 3 zeigt beispielhaft ein derartiges, bevorzugt dreieckförmiges Modulationssignal MS, dessen Extrema die strichlierte, bevorzugt normierte obere bzw. untere Abtastgrenze + 1,0 bzw. - 1,0 vorgeben. Gemäß der Zweifachmodulation werden zur Bildung der Schaltimpulse für die Ventile in den Phasen des Dreipunktwechselrichters zwei getrennte, phasengleiche und zueinander nullpunktverschobene Sollsignalsysteme vom Modulationssignal abgetastet. In der FIG 3 sind zwei derartige, jeweils dreiphasige Sollsignalsysteme beispielhaft dargestellt. Diese werden desweiteren als erstes bzw. zweites Sollsignalsystem bezeichnet und bestehen jeweils aus drei bevorzugt sinusförmigen, um 120° elektrisch zueinander phasenverschobenen Phasensignalverläufen $U_{RO}^*$, $U_{SO}^*$, $U_{TO}^*$ bzw. $U_{RU}^*$, $U_{TU}^*$, $U_{SU}^*$. Dabei sind korrespondierende Phasensignalverlüfe in den beiden Sollsignalsystemen, z.B. die Verläufe $U_{RO}^*$ und $U_{RU}^*$, zueinander phasengleich. Die Phasensignalverläufe des ersten Sollsignalsystems liegen dabei in der Regel im oberen Bereich des Modulationssignales, während die Phasensignalverläufe des zweiten Sollsignalsystems im unteren Bereich liegen. So ist die Mittellinie MLO der Phasensignalverläufe des ersten Sollsignalsystems größer oder zumindest gleich der Mittellinie MLU der Phasensignalverläufe des zweiten Sollsignalsystems. Im Beispiel der FIG 3 verfügen die Phasensignalverläufe des ersten bzw. zweiten Sollsystems über Mittellinien MLO bzw. MLU mit den Werten + 0,5 bzw. - 0,5, und werden von einem normierten Modulationssignal MS abgetastet, welches über einen Hub vom Wert 2 verfügt.

Der Erfindung liegt die Aufgabe zugrunde, das bekannte Verfahren der Zweifachmodulation zum Betrieb eines Zweipunktwechselrichters desweiteren so auszugestalten, daß die elektrischen Grössen am Ausgang des Umrichters über ein insbesondere für eine als Last gespeiste elektrische Maschine günstiges Oberschwingungsspektrum verfügen.

Die Aufgabe wird gelöst mit Hilfe der Merkmale des Anspruches 1 und des nebengeordneten Anspruches 5. Vorteilhafte weitere Ausgestaltungen der Erfindung sind in den Unteransprüchen angegeben.

Die Erfindung wird desweiteren anhand der FIG 4 bis 18 näher erläutert. Dabei zeigt:

FIG 1
das Blockschaltbild eines nach dem Prinzip der Zweifachmodulation aufgebauten Steuersatzes für einen Dreipunktwechselrichter,

FIG 2
die mit Hilfe eines Dreipunktwechselrichters erzeugbaren, diskreten Lagen des Spannungsraumzeigers im $\alpha,\beta$-Koordinatensystem,

FIG 3
beispielhaft die Verläufe eines normierten, dreieckförmigen Modulationssignales und der Phasensignale für ein erstes und zweites Sollsignalsystem zum Betrieb eines Dreipunktwechselrichters mittels Zweifachmodulation bei einer Aussteuerung von A = 0,53,

FIG 4
ein erstes Betriebsverfahren für einen Dreipunktwechselrichter gemäß der Erfindung in Blockschaltbilddarstellung,

FIG 5
beispielhaft die Phasensignalverläufe eines ersten und zweiten Sollsignalsystems bei Zweifachmodulation und einer Aussteuerung von A = 0,75,

FIG 6
die sich gemäß der Erfindung aus den Phasensignalverläufen der FIG 5 ergebenden optimierten Phasensignalverläufe zur Erzeugung von oberschwingungsgünstigen elektrischen Größen am Wechselrichterausgang,

FIG 7
eine vorteilhafte, weitere Ausführungsform des ersten Betriebsverfahrens für einen Dreipunktwechselrichter gemäß der Erfindung in Blockschaltbilddarstellung,

FIG 8
beispielhaft die Bildung eines Ausschnittes aus den Phasensignalverläufen eines ersten Sollsignalsystems entsprechend FIG 6,

FIG 9
die sich durch Modulation der erfindungsgemäßen Phasensignalverläufe von FIG 6 mittels eines normierten, dreieckförmigen Modulationssignales ergebenden Schaltzustandssignale für die Ventile eines Dreipunktwechselrichters,

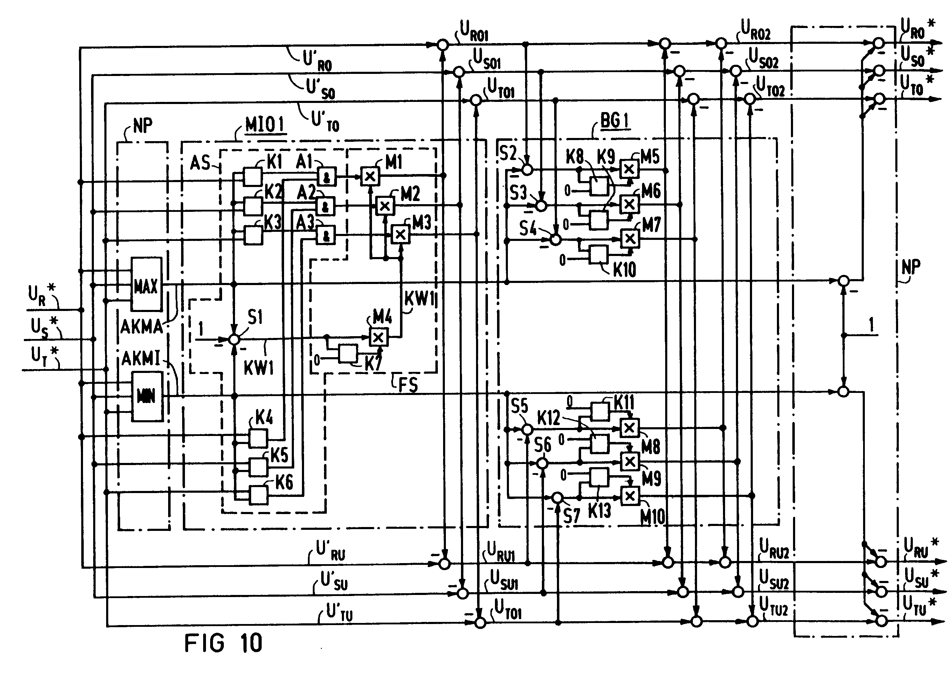

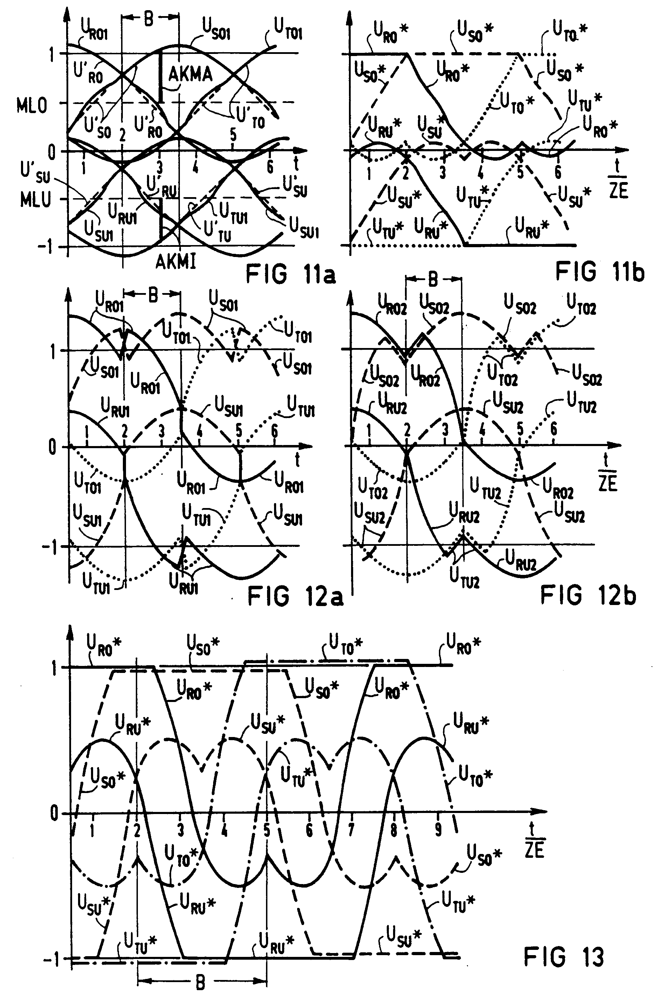

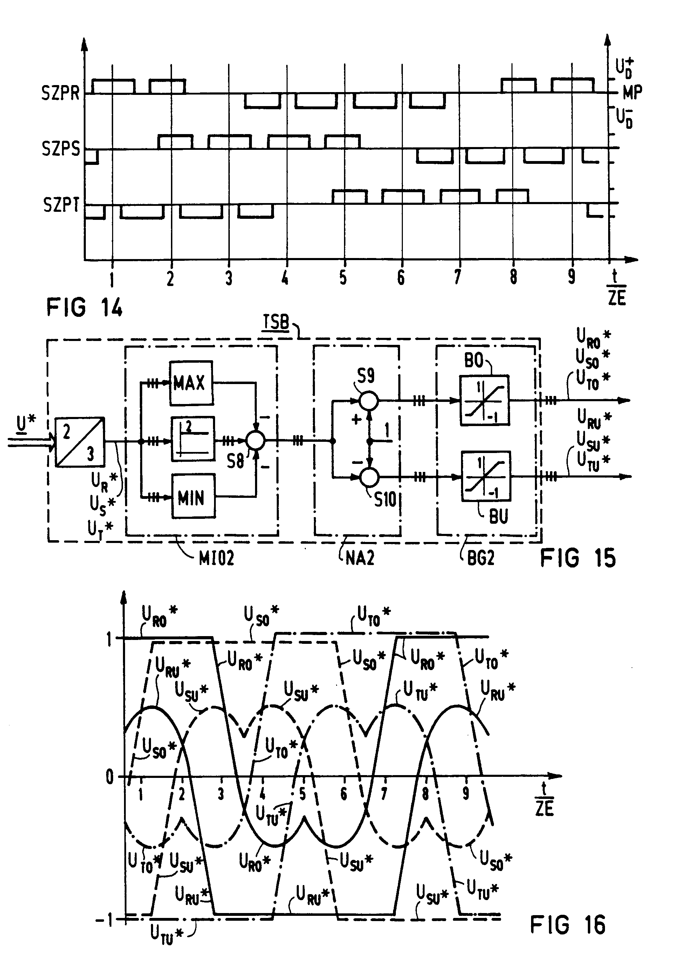

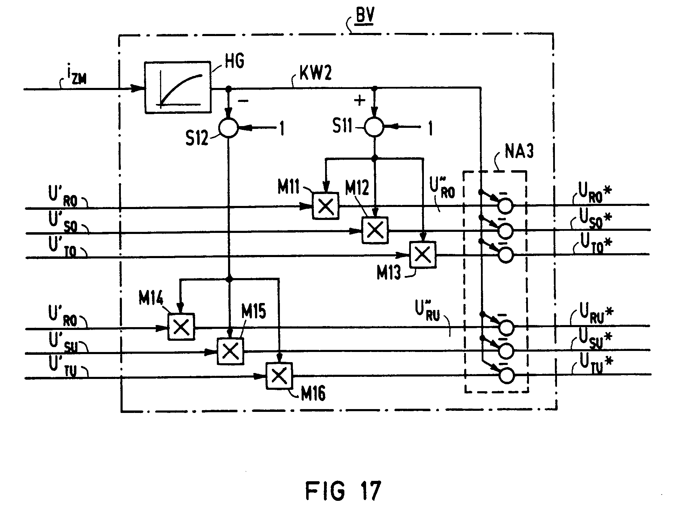

FIG 10 eine weitere vorteilhafte Ausgestaltung des ersten Betriebsverfahrens für einen Dreipunktwechselrichter gemäß der Erfindung in Blockschaltbilddarstellung,
FIG 11a, b
von der Ausführungsform der Erfindung gemäß FIG 10 gebildete Phasensignalverläufe bei einer Aussteuerung von A = 0,53,
FIG 12a, b und FIG 13
von der Ausführungsform der Erfindung gemäß FIG 10 gebildete Phasensignalverläufe bei einer Aussteuerung von A = 0,75,
FIG 14
die sich durch Modulation der erfindungsgemäßen Phasensignalverläufe von FIG 13 mittels eines normierten, dreieckförmigen Modulationssignales ergebenden Schaltzustandssignale für die Ventile eines Dreipunktwechselrichters,
FIG 15
ein zweites Betriebsverfahren für einen Dreipunktwechselrichter gemäß der Erfindung in Blockschaltbilddarstellung,
FIG 16
die sich mittels des zweiten Betriebsverfahrens entsprechend FIG 15 ergebenden, optimierten Phasensignalverläufe zur Erzeugung von oberschwingungsgünstigen elektrischen Größen am Wechselrichterausgang,
FIG 17
eine vorteilhafte Ergänzung des erfindungsgemäßen ersten bzw. zweiten Betriebsverfahrens in Blockschaltbilddarstellung, und
FIG 18a, b, c
beispielhaft die Bildung eines Ausschnittes von je einem Phasensignalverlauf eines ersten und zweiten Sollspannungssystems mit Hilfe der vorteilhaften Ergänzung der erfindungsgemäßen Betriebsverfahren gemäß FIG 17.

Die FIG 1 zeigt das Blockschaltbild eines Steuersatzes zum Betrieb eines Dreipunktwechselrichters DWR nach dem Prinzip der Zweifachmodulation. Dabei dient zur Vorgabe eines gewünschten Spannungs-Raumzeigers U* für die als Last vom Dreipunktwechselrichter $\overline{DWR}$ betriebene Drehstrommaschine M eine Sollwertvorgabeeinheit SV. Dieser Soll-Spannungsraumzeiger wird desweiteren in einem Teilsystembildner TSB gemäß der Zweifachmodulation in ein erstes und zweites Sollsignalsystem aufgespalten. Jedes der beiden Sollsignalsysteme besteht dabei in der oben beschriebenen Weise aus einem Satz von drei z.B. sinusförmigen, um 120° elektrisch zueinander phasenverschobenen Phasensignalverläufen $U_{RO}^*$ , $U_{SO}^*$ , $U_{TO}^*$ bzw. $U_{RU}^*$ , $U_{SU}^*$ , $U_{TU}^*$ . Ein Hilfsspannungsgenerator HSG stellt das bevorzugt dreieckförmige Modulationssignal MS zur Abtastung der Phasensignalverläufe der Sollsignalsysteme zur Verfügung. Mittels einer zusätzlichen, vom Teilsystembildner TSB zum Hilfsspannungsgenerator HSG verlaufenden Signalleitung SY kann der Verlauf des Modulationssignales auf die Phasensignalverläufe der Sollsignalsysteme synchronisiert werden. Die eigentliche Abtastung der gewünschten Sollsignalsysteme erfolgt vorteilhaft in je einem ersten und zweiten Modulator MOS und MUS durch Überlagerung der entsprechenden Phasensignalverläufe mit dem Modulationssignal. Die binären Modulationsimpulse PRO, PSO, PTO und PRU, PSU, PTU am Ausgang von MOS und MUS zeigen an, ob das Modulationssignal MS größer oder kleiner als der jeweilige Phasensignalverlauf ist. Die Signale zum Schalten der Ventile in den Wechselrichterphasen PR, PS, PT werden schließlich mittels der Teile ZIBR, ZIBS, ZIBT eines Zündimpulsbildners ZIB zur Verfügung gestellt. In der FIG 1 sind hierzu beispielhaft die Schaltimpulse ZT1 bis ZT4 zur Ein- und Ausschaltung der Ventile T1 bis T4 der Wechselrichterphase PR dargestellt. Diese werden im Teil ZIBR des Zündimpulsbildners ZIB unter Zuhilfenahme der aus der Modulation der Phasensignalverläufe $U_{RO}^*$ und $U_{RU}^*$ gebildeten binären Modulationsimpulse PRO und PRU gebildet.

Die in der FIG 3 beispielhaft dargestellten Phasensignalverläufe $U_{RO}^*$ , $U_{SO}^*$ , $U_{TO}^*$ und $U_{RU}^*$ , $U_{SU}^*$ , $U_{TU}^*$ eines ersten und zweiten Sollsignalssystems entsprechen einer Aussteuerung mit dem Wert A = 0,53. In diesem Fall ist die Amplitude eines jeden Phasensignalverlaufes größer als der halbe Hub des normierten Modulationssignales MS, d.h. größer als der Wert 1,0. Bei einer Aussteuerung mit einem Wert A = 0,5 würden Spannungs-Raumzeiger mit einer Länge entstehen, welche dem Radius des in FIG 2 eingetragenen Kreises KI entspricht. Bei einem derartigen Aussteuerungswert würden die Maxima der Phasensignalverläufe des ersten Sollsignalsystems und die Minimalwerte der Phasensignalverläufe des zweiten Sollsignalsystems die obere Abtastgrenze + 1,0 bzw. die untere Abtastgrenze - 1,0 zwar bereits geringfügig über-bzw. unterschreiten, jedoch würden sich die Minima der Phasensignalverläufe des ersten Sollsignalsystems und die Maxima der Phasensignalverläufe des zweiten Sollsignalsystems um die Koordinatennullinie herum gerade an den Flanken berühren. Bei einer Erhöhung der Aussteuerung über den Wert A = 0,5 kommt es zunehmend zu einer Überlagerung der Phasensignalverläufe der beiden Sollsignalsysteme. In der Darstellung nach FIG 3 ist diese Überlagerung bereits bei einem Aussteuerungswert A = 0,53 durch das Auftreten von Schnittbereichen SB deutlich zu erkennen. Sowohl das Auftreten derartiger Schnittbereiche, als auch das Über- bzw. Unterschreiten der durch die Spitzen des Modulationssignales MS vorgegebenen oberen bzw. unteren Abtastgrenze zeigt an, daß eine Übersteuerung vorliegt. In einem solchen Fall werden die die obere Abtastgrenze überschreitenden bzw. die die untere Abtastgrenze unterschreitenden Bereiche der Phasensignalverläufe in den Bereichen der Maxima bzw. Minima des ersten bzw. zweiten Sollsignalsystems vom Modulationssignal MS nicht mehr erfaßt. Es tritt somit ein Modulationsfehler auf, da die "Kuppen" der bevorzugt sinusförmigen und als Sollverläufe für die elektrischen Größen am Ausgang des Umrichters dienenden Phasensignalverläufe vom Modulationssignal nicht mehr abgetastet werden können. Die Folge davon ist eine mit der Aussteuerung zunehmende Verzerrung der elektrischen Signale am Ausgang des Wechselrichters, d.h. eine zunehmende Abweichung von der gewünschten Sinusform. Diese Signale sind folglich mit einem zunehmenden, insbesondere für eine als Last betriebene elektrische Maschine ungünstigen Oberschwingungsspektrum belastet. Aus diesem Grund ist es vorteilhaft, wenn bei Phasensignalverläufen, die die obere bzw. untere Abtastgrenze über- bzw. unterschreiten, bzw. spätestens ab Aussteuerungen mit größeren Werten als 0,5 Maßnahmen ergriffen werden, um die ungünstigen Auswirkungen der Übersteuerung auf das Oberschwingungsspektrum der Umrichterausgangssignale zu verhindern.

Hierzu wird erfindungsgemäß vorgeschlagen, einen ersten Abstandswert zwischen dem jeweiligen Maximalwert der Phasensignalverläufe und der oberen Abtastgrenze, und einen zweiten Abstandswert zwischen dem jeweiligen Minimalwert der Phasensignalverläufe und der unteren Abtastgrenze zu bilden. In einer ersten Ausführungsform des erfindungsgemäßen Verfahrens werden alle Phasensignalverläufe des ersten Sollsignalsystems für die Dauer der Überschreitung der oberen Abtastgrenze um die aktuelle Größe des ersten Abstandwertes erniedrigt, und gleichzeitig alle Phasensignalverläufe des zweiten Sollsignalsystems für die Dauer der Unterschreitung der unteren Abtastgrenze um die aktuelle Größe des zweiten Abstandswertes erhöht. Dies wird desweiteren anhand der FIG 5 näher erläutert.

Die in der FIG 5 dargestellten Phasensignalverläufe $U'_{RO}$ , $U'_{SO}$ , $U'_{TO}$ und $U'_{RU}$ , $U'_{SU}$ , $U'_{TU}$ entsprechen einer Aussteuerung mit dem SU Wert A = 0,75. Bei einer derartigen Aussteuerung treten sowohl deutliche Überschreitungen der oberen Abtastgrenze + 1,0 bzw. Unterschreitungen der unteren Abtastgrenze - 1,0 durch die Phasensignalverläufe des ersten bzw. zweiten Sollsignalsystems, als auch merkliche Überschneidungen der Phasensignalverläufe beider Sollsignalsysteme im Bereich der Nullinie des Koordinatensystems auf. In der FIG 5 sind die Bereiche der Über- bzw. Unterschreitung der Abtastgrenzen schraffiert dargestellt. Desweiteren sei speziell der mit B markierte Bereich zwischen zwei und fünf Zeiteinheiten ZE in der FIG 5 betrachtet. Darin sind der bei drei Zeiteinheiten auftretende erste Abstandswert AW1 zwischen dem aktuellen Maximalwert aus den Phasensignalverläufen und der oberen Abtastgenze + 1,0, und der zweite Abstandswert AW2 zwischen dem aktuellen Minimalwert aus den Phasensignalverläufen und der unteren Abtastgrenze - 1,0 beispielhaft eingetragen. Um diesen ersten bzw. zweiten Abstandswert AW1 bzw. AW2 werden erfindungsgemäß die Phasensignalverläufe des ersten bzw. zweiten Sollsignalsystems erniedrigt bzw. erhöht.

Dies hat in der FIG 5 beispielsweise zur Folge, daß der Phasensignalverlauf $U'_{SO}$ im Bereich B2 zwischen den Schnittpunkten SP1 und SP2 mit der oberen Abtastgrenze auf deren Wert begrenzt wird. Entsprechend werden innerhalb des Bereiches B der Phasensignalverlauf $U'_{TU}$ im Bereich zwischen zwei Zeiteinheiten und dem Schnittpunkt SP3 und der Phasensignalverlauf $U'_{RU}$ im Bereich zwischen dem Schnittpunkt SP4 und fünf Zeiteinheiten auf den Wert der unteren Abtastgrenze - 1,0 begrenzt. Der durch diese Begrenzungen "verlorengegangene" Hub in den den jeweiligen Maximal-bzw. Minimalwert im ersten bzw. zweiten Sollsignalsystem bildenden Phasensignalverläufen, welcher jeweils durch den Verlauf des ersten bzw. zweiten Abstandswertes repräsentiert wird, wird aber in den übrigen, nicht begrenzten Phasensignalverläufen des jeweiligen Sollsignalsystems erfindungsgemäß durch Subtraktion bzw. Addition des ersten bzw. zweiten Abstandswertes berücksichtigt. Auf diese Weise kann erfindungsgemäß besonders vorteilhaft der lineare Aussteuerbereich erhöht werden. Die elektrischen Signale am Ausgang des Umrichters weichen somit weniger von der gewünschten Sinusform ab und haben folglich ein günstiges Oberschwingungsspektrum.

In einer weiteren Ausführungsform des erfindungsgemäßen Verfahrens ist es vorteilhaft, wenn auch bei Unter- bzw. Überschreitung der oberen bzw. unteren Abtastgrenze durch die Phasensignalverläufe eine entsprechende Korrektur der Phasensignalverläufe mit Hilfe des ersten bzw. zweiten Abstandswertes vorgenommen wird. In einem solchen Fall werden die Phasensignalverläufe des ersten Sollsignalsysteme um den ersten Abstandswert erhöht und die Phasensignalverläufe des zweiten Sollsignalsystems um den zweiten Abstandswert erniedrigt. Dies hat im Bereich B der in der FIG 5 dargestellten Verläufe zur Folge, daß z.B. der Phasensignalverlauf $U'_{SO}$ zusätzlich zur Begrenzung auf den Wert + 1,0 im Bereich B2 zwischen SP1 und SP2 nun in den Bereichen B1 bzw. B3 zwischen zwei Zeiteinheiten und SP1 bzw. zwischen SP2 und 5 Zeiteinheiten auf den Wert der oberen Abtastgrenze + 1,0 "angehoben" wird. In der gleichen Weise findet im Bereich B zusätzlich zur Begrenzung der Phasensignalverläufe $U'_{RU}$ und $U'_{TU}$ auf den Wert der unteren Abtastgrenze - 1,0 in den schraffierten Bereichen nun eine Absenkung auf den gleichen Wert im Bereich zwischen den Schnittpunkten SP3 und SP4 statt. Die sich mit Hilfe dieser Ausführungsform des erfindungsgemäßen Verfahrens ergebenden Verläufe der Phasensignale $U^*_{RO}$ , $U^*_{SO}$ , $U^*_{TO}$ und $U'_{RU}$ , $U'_{SU}$ , $U'_{TU}$ des ersten und zweiten Sollsignalsystems sind in der FIG 6 dargestellt. Es ist besonders vorteilhaft, wenn diese Signale in einer besonderen Ausführungsform des in der FIG 1 als Block dargestellten Teilsignalbildners TSB gebildet und anschließend den beiden Modulatoren MOS und MUS zur weiteren Verarbeitung in der üblichen Weise zur Verfügung gestellt werden. Die sich somit mit Hilfe des erfindungsgemäßen Verfahrens ergebenden korrigierten Phasensignalverläufe gemäß der FIG 6 haben neben einer Erhöhung des linearen Aussteuerbereiches des Dreipunktwechselrichters den weiteren besonderen Vorteil, daß im zeitlichen Mittel die zur Bildung von in der $\alpha,\beta$-Koordinatenebene der FIG 2 liegenden Spannungs-Raumzeiger notwendige mittlere Umschaltfrequenz zwischen den diskreten Raumzeigerlagen auf ca. 2/3 des ursprünglichen Wertes reduziert wird.

In der FIG 4 ist das erfindungsgemäße Betriebsverfahren für den Dreipunktwechselrichter am Beispiel eines Blockschaltbildes dargestellt. Es ist desweiteren besonders vorteilhaft, einen Teilsystembildner TSB zur Durchführung des erfindungsgemäßen Verfahrens entsprechend der Schaltung von FIG 4 aufzubauen. Diese besteht bevorzugt aus einem Koordinatenwandler KW, einem ersten Nullsystemaddierer NA1 und einem Nullsystemmanipulator NP. Ein am Eingang des Teilsystembildners TSB als Sollwert vorgegebener gewünschter Spannungs-Raumzeiger U* wird dabei im Koordinatenwandler zunächst in $\overline{\text{ein}}$ dreiphasiges Sollsignalsystem $U^*_R$ , $U^*_S$ , $U^*_T$ umgewandelt. Dieses System dient als Ausgangspunkt zur Bildung des ersten und zweiten Sollsignalsystems für die Zweifachmodulation. Die eigentliche Aufspaltung in die Phasensignalverläufe $U'_{RO}$ , $U'_{SO}$ , $U'_{TO}$ und $U'_{RU}$ , $U'_{SU}$ , $U'_{TU}$ des ersten und zweiten Sollsignalsystems erfolgt mit Hilfe des ersten Nullsystemaddierers NA1. Im speziellen Ausführungsbeispiel der FIG 4 wird hierzu das Sollsignalsystem $U^*_R$ , $U^*_S$ , $U^*_T$ um den Wert 0,5 erhöht bzw. erniedrigt. Dies hat entsprechend den Darstellungen der FIG 3 und 5 zur Folge, daß die Phasensignalverläufe des ersten und zweiten Sollsignalsystems jeweils um eine bei + 0,5 bzw. - 0,5 liegende erste bzw. zweite Mittellinie MLO bzw. MLU verlaufen. Die derart nullpunktverschobenen Sollsignalsysteme werden schließlich im Nullsystemmanipulator NP entsprechend dem erfindungsgemäßen Verfahren korrigiert. Hierzu erfaßt jeweils ein Maximal- bzw. Minimalwertdetektor MAX bzw.

MIN den aktuellen Maximal- bzw. Minimalwert der Phasensignalverläufe. Ein in diesem Fall vorzeichenbehafteter erster und zweiter Abstandswert AW1 und AW2 wird dabei gebildet durch Subtraktion bzw. Addition des Betrages der oberen bzw. unteren Abtastgrenze vom bzw. zum erfaßten Maximal- bzw. Minimalwert. Zur Bildung der korrigierten Ausgangssignale des Teilsystembildners TSB wird schließlich der erste bzw. zweite Abstandswert von den Phasensignalverläufen des ersten bzw. zweiten Sollsignalsystems subtrahiert.

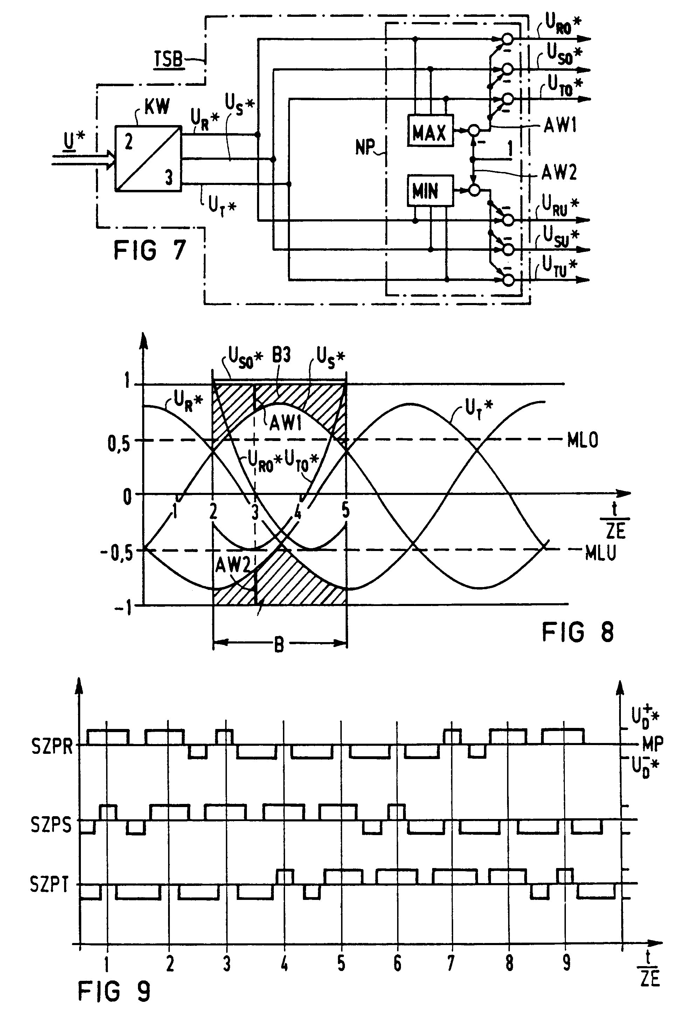

In einer weiteren vorteilhaften Ausführungsform des erfindungsgemäßen Verfahrens erfolgt keine vorherige Aufspaltung des Sollsignalsystem $U^*_R$ , $U^*_S$ , $U^*_T$ in zwei unterschiedliche Sollsignalsysteme gemäß der Zweifachmodulation. Vielmehr repräsentiert dieses Sollsignalsystem bereits zwei in diesem Fall übereinanderliegende Sollsignalsysteme mit zunächst identischen und mit der Nullinie übereinstimmenden Mittellinien. Es ist gemäß der in der FIG 7 als Blockschaltbild dargestellten vorteilhaften Ausführungsform somit möglich, das dreiphasige Sollsignalsystem $U^*_R$, $U^*_S$ , $U^*_T$ am Ausgang des Koordinatenwandlers KW ohne vorherige Nullsystemaddition auch direkt einem entsprechend der Schaltung von FIG 4 aufgebauten Nullsystemmanipulator NP zweifach zuzuführen. Die sich in diesem Fall am Ausgang des Teilsystembildners TSB der FIG 7 ergebenden korrigierten Phasensignalverläufe eines ersten und zweiten Sollsignalsystems gemäß der Zweifachmodulation sind den in der FIG 6 dargestellten Verläufen vollkommen identisch. Dies sei desweiteren anhand der FIG 8 im Bereich B kurz erläutert. Auch hier ist beispielsweise der bei drei Zeiteinheiten ZE auftretende aktuelle Wert des ersten und zweiten Abstandswertes AW1 und AW2 im jeweils schraffierten Bereich zwischen dem aktuellen Maximal- bzw. Minimalwert der Phasensignalverläufe und der oberen bzw. unteren Abtastgrenze dargestellt. Der erste Abstandswert AW1 ergibt sich hierbei als Abstand zwischen dem im Bereich B als aktueller Maximalwert dienenden Verlauf von $U^*_S$ und der oberen Abtastgrenze + 1,0. Werden in diesem Fall die Verläufe $U^*_R$ , $U^*_S$ , $U^*_T$ im Bereich B um den ersten Abstandswert AW1 erhöht, so ergeben sich die mit der Darstellung in der FIG 6 übereinstimmenden Verläufe der korrigierten Phasensignale $U^*_{RO}$ , $U^*_{SO}$ , $U^*_{TO}$ des ersten Sollsignalsystems. Man erkennt, daß im Bereich B aufgrund der Korrektur der Phasensignalverlauf $U^*_{SO}$ ebenfalls auf den Wert der oberen Abtastgrenze + 1,0 hinaufgezogen bzw. begrenzt wird, während die Verläufe von $U^*_{RO}$ und $U^*_{TO}$ ein Minimum durchlaufen.

In der FIG 9 sind schließlich die sich beispielsweise mit Hilfe der Schaltungen von FIG 4 bzw. 7 aus den erfindungsgemäß korrigierten Phasensignalverläufen gemäß FIG 6 bzw. 8 für die einzelnen Phasen PR, PS, PT ergebenden Schaltzustandssignale SZPR, SZPS, SZPT dargestellt. Dabei ist jeweils bei einem positiven Zustandssignal das positive Potential $U_D^+$ , bei Fehlen eines Zustandssignals das Mittenpotential MP und bei einem negativen Zustandssignal das negative Potential $U_D^-$ an den Ausgang der jeweiligen Dreipunktwechselrichterphase durchgeschaltet. So entspricht ein positives Zustandssignal, das Fehlen eines Zustandssignales bzw. ein negatives Zustandssignal in der Darstellung von FIG 2 einem nach oben gehenden, einem waagerechten bzw. einem nach unten gehenden "Schalter" zur Kennzeichnung des aktuellen Schaltzustandes der jeweiligen Phasen in den mit den Zahlen 1 bis 27 markierten, möglichen Schaltzustandskombinationen eines dreiphasigen Dreipunktwechselrichters.

Weitere vorteilhafte Ausgestaltungen des erfindungsgemäßen Betriebsverfahrens für einen Dreipunktwechselrichter werden desweiteren anhand der FIG 10 bis 13 näher erläutert.

Eine erste weitere Ausführungsform ist den Figuren 11a und 11b am Beispiel einer Aussteuerung mit dem Wert A = 0,53 dargestellt. Hierzu wird zunächst der auf die jeweilige Mittellinie MLO bzw. MLU bezogene aktuelle Momentanwert AKMA bzw. AKMI desjenigen Phasensignalverlaufes bestimmt, welcher gerade den aktuellen Maximal- bzw. Minimalwert bildet. Sobald die Summe aus den Beträgen dieser Momentanwerte den halben Hub des Modulationssignales überschreitet, wird die Differenz aus dieser Summe und dem halben Hub des Modulationssignales auf denjenigen Phasensignalverlauf im ersten Sollsignalsystem addiert, bzw. von demjenigen Verlauf im zweiten Sollsignalsystem subtrahiert, der im jeweiligen Sollsignalsystem weder der aktuelle Maximal- noch der aktuelle Minimalwert ist. So bildet z.B. in dem mit B markierten Bereich in der FIG 11a der Phasensignalverlauf $U'_{SO}$ bzw. $U'_{TU}$ den aktuellen Maximal- bzw. Minimalwert.

Erfindungsgemäß wird nun die Summe aus den auf die erste bzw. zweite Mittellinie MLO bzw. MLU bezogenen Beträgen der Momentanwerte der Phasensignalverläufe $U_{SO}$ und $U_{TU}$ gebildet. Diese Summe übersteigt aufgrund des eine nur geringfügige Übersteuerung hervorrufenden Aussteuerungswertes A = 0,53 beispielsweise nur im Inneren des Bereiches B vorübergehend den halben Hub des Modulationssignales MS mit dem bevorzugt normierten Wert 1. Aus diesem Grund kommt es in diesem Fall nur im Inneren des Bereiches B zu der erfindungsgemäßen Aufschaltung eines aus der Differenz aus der obigen Summe und dem halben Hub des Modulationssignales gebildeten ersten Korrekturwertes KW1. Dieser erste Korrekturwert wird auf denjenigen Phasensignalverlauf im ersten bzw. zweiten Sollsignalsystem aufgeschaltet, der weder den aktuellen Maximal-noch den aktuellen Minimalwert bildet. Im Bereich B in der FIG 11a ist dies der Phasensignalverlauf $U'_{RO}$ bzw. $U'_{RU}$ im ersten bzw. zweiten Sollsignalsystem. Erfindungsgemäß wird der erste Korrekturwert auf den Verlauf von $U'_{RO}$ im Sinne seiner Erhhung aufaddiert bzw. von dem Verlauf $U'_{RU}$ im Sinne einer Erniedrigung subtrahiert. Aufgrund dieser erfindungsgemäßen Korrektur werden die Phasensignalverläufe des ersten und zweiten Sollsignalsystems in den um die jeweiligen Mittellinien MLO bzw. MLU liegenden Bereichen in der aus der Darstellung von FIG 11a ersichtlichen Weise geringfügig verzerrt. Es entstehen somit die in FIG 11a mit durchgezogener Linie dargestellten korrigierten Phasensignalverläufe $U_{RO1}$, $U_{SO1}$, $U_{TO1}$ und $U_{RU1}$, $U_{SU1}$, $U_{TU1}$, welche von den in der FIG 11a strichliert eingetragenen, den Verläufen der FIG 3 entsprechenden unkorrigierten Phasensignalverläufe $U'_{RO}$ , $U'_{SO}$ , $U'_{TO}$ und $U'_{RU}$ , $U'_{SU}$ , $U'_{TU}$ aufgrund des Aussteuerungswertes A = 0,53 nur geringfügig abweichen. Werden die derart korrigierten Phasensignalverläufe desweiteren der bereits anhand der FIG 4 bis 9 erläuterten weiteren Korrektur zum Zwecke der Erhöhung des linearen Aussteuerungsbereiches unterworfen, so entstehen die in der FIG 11b dargestellten korrigierten Phasensignalverläufe $U^*_{RO}$ , $U^*_{SO}$ , $U^*_{TO}$ und $U^*_{RU}$ , $U^*_{SU}$ , $U^*_{TU}$ . Diese können zur weiteren Verarbeitung beispielsweise den in den FIG 1 dargestellten Modulatoren MOS und MUS als Eingangssignale zugeführt werden.

In der FIG 12a ist eine der FIG 11a entsprechende erfindungsgemäße Korrektur am Beispiel von Phasensignalverläufen mit einer Aussteuerung von A = 0,75 dargestellt. Bei einer derartigen Aussteuerung übersteigt die Summe aus den Beträgen des aktuellen Maximal- und Minimalwertes stets den halben Hub des Modulationssignales MS. Aus diesem Grund erfolgt beispielsweise eine Korrektur der Phasensignalverläufe $U'_{RO}$ und $U'_{RU}$ im gesamten Bereich B. Zudem führt die Korrektur bereichsweise zu einer Über- bzw. Unterschreitung des aktuellen Maximal- bzw. Minimalwertes durch den korrigierten Phasensignalverlauf. So wird beispielsweise im Bereich B in der FIG 12a durch Addition des ersten Korrekturwertes KW1 der Phasensignalverlauf von $U_{RO1}$ am linken Ende des Bereiches B so stark vergrößert, daß er den strichliert dargestellten, bisherigen Maximalwert $U_{SO1}$ überschreitet. Entsprechend wird der Phasensignalverlauf $U_{RU1}$ durch Subtraktion des ersten Korrekturwertes so stark erniedrigt, daß er am rechten Ende des Bereiches B vorübergehend den punktiert dargestellten bisherigen Minimalwert $U_{TU}$ unterschreitet. Gemß einer weiteren Ausführungsform des erfindungsgemäßen Betriebsverfahrens wird die Korrektur des im jeweiligen Sollsignalsystem weder den aktuellen Maximal- noch den aktuellen Minimalwert bildenden Phasensignalverlaufes vorteilhaft so begrenzt, daß die bisherigen Maximal- bzw. Minimalwerte durch die Korrektur nicht über- bzw. unterschritten werden. Desweiteren wird der durch die Begrenzung bedingte Verlust an Signalhöhe im begrenzten Phasensignalverlauf erfindungsgemäß in dem zum begrenzten Phasensignalverlauf im anderen Sollsignalsystem korrespondierenden Phasensignalverlauf kompensiert.

Eine derartige Begrenzung ist in der FIG 12b dargestellt. Man erkennt, daß beispielsweise im Bereich B der Phasensignalverlauf $U_{RO2}$ an der linken Bereichsgrenze vorübergehend mit dem strichliert eingetragenen Verlauf von $U_{SO2}$ übereinstimmt. In der gleichen Weise wird an der rechten Bereichsgrenze der Phasensignalverlauf $U_{RU2}$ auf den punktiert eingetragenen Minimalverlauf $U_{TU2}$ begrenzt. Desweiteren wird der Phasensignalverlauf $U_{RU2}$ am linken Ende des Bereiches B im Sinne einer Kompensation um den Betrag der Erniedrigung von $U_{RO2}$ erhöht. In der gleichen Weise wird am rechten Rand des Bereiches B der Phasensignalverlauf von $U_{RO2}$ um den Betrag der Erhöhung von $U_{RU2}$ erniedrigt. Werden nun die gemäß der Darstellung von FIG 12b korrigierten und begrenzten Phasensignalverläufe $U_{RO2}$, $U_{SO2}$, $U_{TO2}$ und $U_{RU2}$, $U_{SU2}$, $U_{TU2}$ wiederum der bereits beispielsweise anhand des FIG 4 bis 9 erläuterten weiteren Korrektur zur Erzielung eines erhöhten linearen Aussteuerbereiches bei niedriger Schaltfrequenz unterzogen, so entstehen die in der FIG 13 dargestellten Phasensignalverläufe. Man erkennt, daß diese Verläufe im Vergleich zu den entsprechenden Verläufen der FIG 6 unterschiedliche Flankenkrümmungen aufweisen. Zudem verlaufen alle Phasensignalverläufe der FIG 13 im Vergleich zu den Verläufen der FIG 6 über einen längeren Bereich auf dem Wert der oberen bzw. unteren Abtastgrenze. So verläuft beispielsweise der strichliert dargestellte Phasensignalverlauf $U_{SO}^*$ in der FIG 6 gerade innerhalb des Bereiches B auf dem Wert + 1,0 der oberen Abtastgrenze. In der FIG 13 dagegen hat der entsprechende Phasensignalverlauf $U_{SO}^*$ die obere Abtastgrenze bereits vor Beginn des Bereiches B bei zwei Zeiteinheiten ZE erreicht, und behält diese auch über das Ende des Bereiches B bei 5 Zeiteinheiten ZE bei.

Werden die Phasensignalverläufe der FIG 13 wiederum den Modulatoren MOS und MUS der FIG 1 als Eingangssignal zur weiteren Verarbeitung zur Verfügung gestellt, so entstehen die in der FIG 14 dargestellten Schaltzustandssignale SZPR, SZPS, SZPT für die Phasen PR, PS, PT des Dreipunktwechselrichters. Ein Vergleich mit den in der FIG 9 dargestellten Schaltzustandssignalen zeigt, daß z.B. im Zustandssignal SZPR für die Phase PR insbesondere in den Bereichen bei etwa 3 und 7 Zeiteinheiten ZE in der FIG 14 keine Änderungen des Schaltzustandssignales stattfinden. Dies hat den besonderen Vorteil, daß bei der Verwendung der korrigierten Phasensignalverläufe entsprechend der FIG 13 zur Approximation eines beliebigen Raumzeigers weniger häufig zwischen den zulässigen diskreten Raumzeigerlagen hin- und hergeschaltet werden muß. Desweiteren ist hiermit sichergestellt, daß zur Approximation eines derartigen Raumzeigers nur unmittelbar "benachbarte" diskrete Raumzeigerlagen zur Modulation beitragen. Soll beispielsweise der in FIG 2 eingetragene Spannungs-Raumzeiger $\underline{U}_2^*$ approximiert werden, so tragen bei Verwendung von entsprechend dem Ausführungsbeispiel von FIG 13 erzeugten Phasensignalverläufen nur die Schaltzustände bei, welche sich an den Ecken des die Raumzeigerspitze umgebenden Dreieckes D1 befinden. Im vorliegenden Beispiel sind dies die Schaltzustände 15, 21, 9, 16, 22. Diese Schaltzustände werden beispielsweise zyklisch in der Reihenfolge 21, 22, 9, 15, 16, 15, 9, 22, 21 durchlaufen. Es ist entsprechend der vorteilhaften Ausführungsform des erfindungsgemäßen Betriebsverfahrens ausgeschlossen, daß nicht unmittelbar benachbarte Schaltzustände, z.B. die Zustände 1 bzw. 14 zur Modulation des Spannungs-Raumzeigers $\underline{U}_2^*$ beitragen müssen. Es treten somit in der Schaltzustandsfolge keine wenn auch noch so kurzzeitigen "Umwege" über benachbarte "Dreiecke" auf, z.B. D2 bzw. D3. Da somit zur Raumzeiger-Approximation jeweils nur unmittelbar benachbarte Schaltzustände beitragen, findet bei jedem Übergang auf einen anderen Schaltzustand nur eine einzige Schaltveränderung in einer der drei Phasen des Dreipunktwechselrichters statt. So ändert beispielsweise beim Übergang von Schaltzustand 21 auf 22 lediglich der mittlere "Schalter" seinen Zustand. Entsprechend ändert beim Übergang von Schaltzustand 22 auf Schaltzustand 9 lediglich der linke "Schalter" seinen Schaltzustand. Eine derart günstige Schaltzustandsfolge bewirkt in den elektrischen Signalen am Ausgang des Umrichters und insbesondere im Inneren einer als Last betriebenen elektrischen Maschine ein besonders günstiges Oberschwingungsspektrum, und somit einen dominierenden, sinusförmigen Grundschwingungsanteil.

In der FIG 10 ist die anhand der FIG 11 bis 13 dargestellte besonders vorteilhafte Ausführungsform des erfindungsgemäßen Verfahrens zum Betrieb eines Dreipunktwechselrichters am Beispiel eines Blockschaltbildes dargestellt. Auch hier ist es wiederum vorteilhaft, wenn ein Teilsystembildner TSB zur Durchführung des erfindungsgemäßen Verfahrens entsprechend der Schaltung von FIG 10 aufgebaut ist. Diese enthält einen den Schaltungen von FIG 4 bzw. 7 entsprechenden Nullsystemmanipulator NP, einen ersten Modulationsimpulsoptimierer MIO1 mit einer Auswahlschaltung AS und einer Freigabeschaltung FS, und einen ersten Begrenzer BG1. Der erste Modulationsimpulsoptimierer MIO1 korrigiert dabei das insbesondere über den Koordinatenwandler KW am Eingang eingespeiste dreiphasiges Sollsignalsystem $U_R^*$ , $U_S^*$ , $U_T^*$ derart, daß den Darstellungen von FIG 11a und 12a entsprechende korrigierte Phasensignalverläufe $U_{RO1}$, $U_{SO1}$, $U_{TO1}$ und $U_{RU1}$, $U_{SU1}$, $U_{TU1}$ für das erste und zweite Sollsignalsystem entstehen. Hierzu wird mittels der Detektoren MAX und MIX im ersten Teil des Nullsystemmanipulators NP zunächst der aktuelle Maximal- und Minimalwert der Phasensignalverläufe gebildet. In der Auswahlschaltung AS wird anschließend mittels einer ersten Summierstelle S1 zur Bildung des ersten Korrekturwerte KW1 die Summe aus dem aktuellen Maximalwert AKMA und dem aktuellen Minimalwert AKMI gebildet und um den halben Hub des Modulationssignales reduziert, d.h. vorteilhaft um den normierten Wert 1. Desweiteren werden durch Vergleich des aktuellen Maximal- bzw. Minimalwertes mit den Momentanwerten der Phasensignalverläufe mittels der Komparatoren K1 bis K6 und den die Ausgangssignale der Komparatoren K1, K4 bzw. K2, K5 bzw. K3, K6 zusammenführenden logischen UND-Gliedern A1 bis A3 diejenigen Phasensignalverläufe identifiziert, welche weder im ersten noch im zweiten Sollsignalsystem den aktuellen Maximal- bzw. Minimalwert darstellen. Diese sind die Verläufe $U'_{RO}$ , $U'_{RU}$ bzw. $U'_{SO}$ , $U'_{SU}$ bzw. $U'_{TO}$ , $U'_{TU}$ . Einer der logischen Addierer A1 bis A3 wird somit am Ausgang eine logische 1 zur Kennzeichnung dieser in den beiden Sollsignalsystemen identischen Phase aufweisen. Wird nun der erste Korrekturwert KW1 positiv, was in der Freigabeschaltung mit Hilfe des Komparators K7 durch Vergleich mit dem Wert Null detektiert wird, so wird dieser Korrekturwert mit Hilfe der Multiplizierer M1 bis M4 auf die Phasensignalverläufe im ersten und zweiten Sollsignalsystem der durch die Auswahlschaltung AS detektierten Dreipunktwechselrichterphase aufgeschaltet.

Führt diese Aufschaltung z.B. gemäß der Darstellung in FIG 12a zu einer Über- bzw. Unterschreitung des ursprünglichen Maximal-bzw. Minimalwertes, so wird diese Überhöhung mit Hilfe des Begrenzers BG1 entsprechend der Darstellung von FIG 12b auf den Wert des ursprünglichen Maximums bzw. Minimums begrenzt. Im Begrenzer BG1 findet hierzu beispielsweise für das erste Sollsignalsystem bezogen auf die aktuelle Mittellinie ein Vergleich der korrigierten Phasensignalverläufe $U_{RO1}$, $U_{SO1}$, $U_{TO1}$ am Ausgang des Modulationsimpulsoptimierers mit dem aktuellen Maximalwert AKMA mittels der Summierer S2 bis S4 statt. Überschreitet die Differenz aus einem der Phasensignalverläufe und dem aktuellen Maximalwert AKMA den Wert 0, was mit Hilfe der Komparatoren K8, K9, K10 detektiert wird, so wird der Wert der Überschreitung mit Hilfe der Multiplizierer M5, M6, M7 von dem entsprechenden Verlauf $U_{RO1}$, $U_{SO1}$ bzw. $U_{TO1}$ des ersten Sollsignalsystems im Sinne einer Begrenzung subtrahiert, und auf den entsprechenden Phasensignalverlauf $_{RU1}$, $U_{SU1}$, $U_{TU1}$ im Sinne einer Vorsteuerung addiert. In sehr ähnliche Weise erfolgt eine Korrektur der Phasensignalverläufe des zweiten Sollsignalsystems mit Hilfe der Summierer S5, S6, S7, der Komparatoren K11, K12, K13 und der Multiplizierer M8, M9, M10 durch Vergleich der korrigierten Phasensignalverläufe $_{RU1}$, $U_{SU1}$, $U_{TU1}$ am Ausgang des Modulationsimpulsoptimierers mit dem jeweils aktuellen Minimalwert AKMI.

Werden schließlich die mit Hilfe des Begrenzers BG1 entsprechend der Darstellung von FIG 12b korrigierten Phasensignalverläufe dem zweiten Teil des am rechten Ende der Schaltung von FIG 10 befindlichen Nullsystemmanipulators NP zugeführt, so entstehen in der bereits am Beispiel der Figuren 4 und 7 dargestellten Weise korrigierte und begrenzte Phasensignalverläufe $U_{RO}^*$ , $U_{SO}^*$ , $U_{TO}^*$ und $U_{RU}^*$ , $U_{SU}^*$ , $U_{TU}^*$ entsprechend der Darstellung von FIG 13.

Anhand der Figuren 15 und 16 wird desweiteren ein weiteres Verfahren zur Lösung der der Erfindung zugrundeliegenden Aufgabe näher erläutert. Dies ist in der FIG 15 wiederum in Form eines Blockschaltbildes dargestellt. Es ist wiederum besonders vorteilhaft, wenn ein Teilsystembildner TSB zur Durchführung des erfindungsgemäßen Verfahrens entsprechend der Schaltung von FIG 15 aufgebaut ist. Auch hier wird ein dem Teilsystembildner als Sollsignal zugeführter Spannungs-Raumzeiger $\overline{U^*}$ zunächst in einem Koordinatenwandler KW in ein dreiphasiges Sollsignalsystem mit den Phasensignalverläufen $U_R^*$ , $U_S^*$ , $U_T^*$ übergeführt. Entsprechend der Darstellung von FIG 7 repräsentiert dabei jeder der Phasensignalverläufe je einen zu einem ersten und zweiten Sollsignalsystem gemäß der Zweifachmodulation gehörigen Phasensignalverlauf. Für die weitere Auswertung ist es somit unerheblich, ob einem zweiten Modulationsimpulsoptimierer MIO2 in FIG 15 die um den Nullpunkt herum verlaufenden Phasensignalverläufe $U_R^*$ , $U_S^*$ , $U_T^*$ eines einzigen, dreiphasigen Sollsignalsystems zweifach bzw. ob die auf die jeweiligen Mittellinien z.B. mit den Wert + 0,5 und - 0,5 bezogenen Phasensignalverläufe von zwei nullpunktverschobenen Sollsignalsystemen z.B. entsprechend der Darstellung von FIG 3, zugeführt werden. Zur besseren Übersicht sei desweiteren entsprechend der Darstellung von FIG 15 angenommen, daß dem Modulationsimpulsoptimierer ein einziges, dreiphasiges Sollsignalsystem mit auf der Nullinie liegenden Mittellinie am Eingang zweifach zugeführt wird. Jeder der dazugehörigen Phasensignalverläufe wird dabei der gleichen Korrektur unterworfen. Hierzu wird der jeweilige Phasensignalverlauf zunächst mit dem Hub des Modulationssignales bewertet, welcher in normierter Darstellung bevorzugt den Wert 2 hat. Mittels einer dreiphasigen Summationsstelle S8 wird anschließend vom jeweiligen Phasensignalverlauf der aktuelle Maximal- und Minimalwert aus den Phasensignalverläufen subtrahiert. Die auf diese Weise am Ausgang des Modulationsimpulsoptimierers MIO2 entstehenden korrigierten Phasensignalverläufe werden schließlich durch Nullpunktsverschiebung über einen zweiten Nullsystemaddierer NA2 derart verschoben, daß die Mittellinie der Phasensignalverläufe eines ersten Sollsignalsystems mit der oberen Abtastgrenze und die Mittellinie der Phasensignalverläufe eines zweiten Sollsignalsystems mit der unteren Abtastgrenze übereinstimmen. Im Ausführungsbeispiel der FIG 15 wird hierzu die Mittellinie der Phasensignalverläufe am Ausgang des Modulationsimpulsoptimierers zum einen durch Addition des halben Hubes des Modulationssignals, d.h. um den Wert 1, mittels eines dreiphasigen Summmierers S9 auf den Wert der oberen Abtastgrenze angehoben, bzw. durch Subtraktion des halben Hubes mittels eines weiteren dreiphasigen Summierers S10 auf den Wert der unteren Abtastgrenze abgesenkt. Nach Begrenzung der derart im Nullsystemaddierer NA2 nullpunktsverschobenen Phasensignalverläufe auf den Wert der oberen bzw. unteren Abtastgrenze mittels eines Begrenzers BG2 entstehen am Ausgang des Teilsystembildners TSB die Phasensignalverläufe $U_{RO}^*$, $U_{SO}^*$, $U_{TO}^*$ und $U_{RU}^*$, $U_{SU}^*$, $U_{TU}^*$. Diese sind in der FIG 16 wiederum am Beispiel einer Aussteuerung A = 0,75 dargestellt.

In einer nicht dargestellten Ausführungsform des zweiten erfindungsgemäßen Betriebsverfahrens ist es auch möglich, einem aus zwei identischen Teilen gemäß der Schaltung MIO2 von FIG 15 aufgebauten Modulationsimpulsoptimierers direkt ein erstes und zweites Sollsignalsystem entsprechend der Darstellung von FIG 3 mit den Mittellinien MLO = + 0,5 und MLU = - 0,5 zuzuführen. In einem solchen Fall entstehen innerhalb der Abtastgrenzen die korrigierten Phasensignalverläufe $U_{RO}^*$, $U_{SO}^*$, $U_{TO}^*$ und $U_{RU}^*$, $U_{SU}^*$, $U_{TU}^*$ direkt am Ausgang des Modulationsimpulsoptimierers. Eine zusätzliche Nullsystemaddition in einem nachgeschalteten Nullsystemaddierer NA2 ist hier nicht erforderlich.

Die sich durch Abtastung der Phasensignalverläufe von FIG 16 durch das Modulationssignal ergebenden Schaltzustandssignale für die Phasen des Dreipunktwechselrichters haben gegenüber den sich aus der FIG 13 ergebenden und in der FIG 14 dargestellten Schaltzustandssignale den besonderen Vorteil, daß sich die Frequenz der zur Approximation eines beliebigen Raumzeigers notwendigen Umschaltungen zwischen benachbarten, diskreten Raumzeigerlagen im zeitlichen Mittel weiter reduziert. Dies hat seine Ursache darin, daß bei Vorliegen von redundanten, denselben diskreten Spannungs-Raumzeiger erzeugenden Schaltzuständen nicht mehr alle möglichen Schaltzustände bei der zyklischen Schaltzustandsfolge zur Approximation eines Raumzeigers beitragen. So stehen beispielsweise in der FIG 2 zur Approximation des Raumzeigers $U_2^*$ die unmittelbar benachbarten Schaltzustände 21, 15, 9, 16 und 22 zur Verfügung. Hiervon erzeugen aber jeweils die Schaltzustände 15, 21 bzw. 16, 22 einen identischen, jeweils auf der α-Koordinatenachse bzw. 60° dazu verdrehten Spannungs-Raumzeiger. Es ist ein besonderer Vorteil des erfindungsgemäßen Betriebsverfahrens gemäß der FIG 15, daß im obigen Beispiel jeweils nur einer der beiden redundanten, den gleichen diskreten Spannungs-Raumzeiger erzeugenden Schaltzustände in einer Approximations-Schaltzustandsfolge enthalten ist. So wird z.B. der Spannungs-Raumzeiger $U_2^*$ nun beispielsweise durch zyklisches Umschalten zwischen den diskreten Raumzeigerlagen 21, 22, 9 und 15 approximiert.

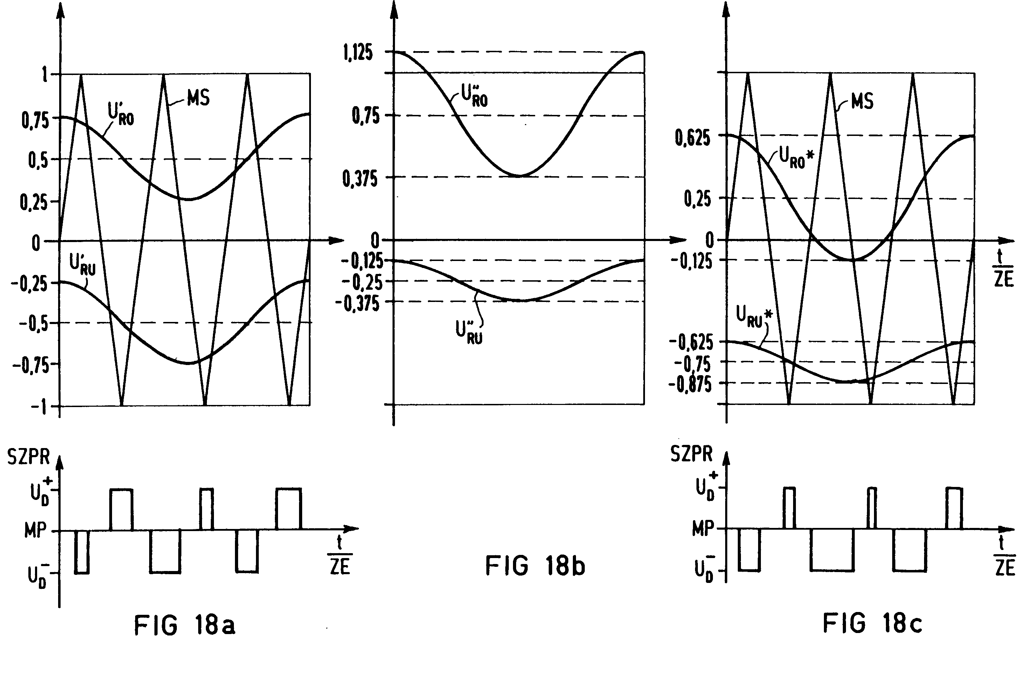

Anhand der FIG 17 und 18a, b, c wird schließlich eine weitere vorteilhafte Ausgestaltung der beiden erfindungsgemäßen Betriebsverfahren dargestellt. Diese hat den Zweck, bei einer möglichen vorübergehenden unterschiedlichen Belastung des positiven und des negativen Potentials $U_D^+$ und $U_D^-$ der Gleichspannungsquelle durch die Phasen des Dreipunktwechselrichters einen Ausgleich herbeizuführen. So ist es beispielsweise gemäß der FIG 1 möglich, daß der vom positiven Potentialanschluß $U_D^+$ in den Dreipunktwechselrichter fließende Strom $i_P$ vorübergehend größer ist als der vom Dreipunktwechselrichter in den negativen Potentialanschluß $U_D^-$ fließende Strom $i_N$. In einem solchen Fall fließt ein Zwischenkreisstrom $i_Z$ mit der in der FIG 1 dargestellten Richtung vom Dreipunktwechselrichter in den Mittenpotentialanschuß MP, wobei die Summe der Ströme $i_Z$ und $i_N$ gleich dem Strom $i_P$ ist. Eine derart unsymmetrische Belastung der Gleichspannungsquelle $U_D$ hat bei der in der FIG 1 dargestellten Ausführungsform eine Ent- bzw. Aufladung des Zwischenkreiskondensators C1 bzw. C2 zur Folge, so daß die Spannung $U_{C1}$ am Kondensator C1 kleiner wird als die Spannung $U_{C2}$ am Kondensator C2. Dies führt zu einer unerwünschten Verschiebung des Potentials an der Stelle MP. Zum Ausgleich einer derartigen ungleichmäßigen Belastung wird erfindungsgemäß der Dreipunktwechselrichter in Abhängigkeit vom Vorzeichen und dem Betrag des bevorzugt geglätteten Zwischenkreisstromes vorübergehend so gesteuert, daß im Fall des oben dargestellten Beispiels die untere Hälfte der Phase des Dreipunktwechselrichters vorübergehend mehr zur Bildung der Umrichterausgangssignale beiträgt. Hierzu wird ein vom Vorzeichen und dem Betrag des Zwischenkreisstromes zwischen dem Mittenpotentialanschluß und dem Dreipunktwechselrichter abhängiger zweiter Korrekturwert gebildet, der in einer bevorzugten normierten Darstellung insbesondere einen Wert zwischen - 1 und + 1 hat. Erfindungsgemäß werden die Phasensignalverläufe des ersten Sollsignalsystems nun mit der Summe aus dem zweiten Korrekturwert und dem halben Hub des Modulationssignales, welches in der bevorzugt normierten Darstellung insbesondere ebenfalls den Wert 1 hat, bewertet. Ferner werden die Phasensignalverläufe des zweiten Sollsignalsystems mit der Differenz aus dem halben Hub des Modulationssignales und dem zweiten Korrekturwert bewertet. Schließlich werden die derart verstärkungsmäßig angepaßten Phasensignalverläufe durch Subtraktion des zweiten Korrekturwertes nullpunktsverschoben. Dies wird desweiteren anhand des oben dargestellten Beispiels mit Hilfe der FIG 18a, b, c näher erläutert.

Hierzu sei wie bisher angenommen, daß das positive Potential $U_D^+$ vom Dreipunktwechselrichter vorübergehend mehr belastet wurde als das negative Potential $U_D^-$ . Der bevorzugt geglättete Zwischenkreisstrom habe die in der FIG 1 eingetragene Richtung und den normierten Wert $i_{ZM}$ = + 0,5 . Die im oberen Teil der FIG 18a beispielhaft dargestellten Phasensignalverläufe $U_{RO}'$ , $U_{RU}'$ der Phase R des ersten bzw. zweiten Sollsignalsystems werden in diesem Fall erfindungsgemäß mit den Faktoren 1 + 0,5 = 1,5 bzw. 1 - 0,5 = 0,5 bewertet. Die sich so ergebenden Phasensignalverläufe $U_{RO}''$ , $U_{RU}''$ sind in der FIG 18b dargestellt. Werden diese Phasensignalverläufe im letzten Schritt schließlich um die Größe des zweiten Korrekturwertes 0,5 nach unten verschoben, so ergeben sich die im oberen Teil der FIG 18c dargestellten Phasensignalverläufe $U_{RO}^*$ , $U_{RU}^*$ . Die Vergrößerung bzw. Verkleinerung der Amplitude des zum ersten bzw. zweiten Sollsignalsystems gehörigen Phasensignalverlaufes, und der anschließenden Verschiebung der Phasensignalverläufe entsprechend dem Betrag und dem Vorzeichen des zweiten Korrekturwertes in Richtung der unteren Abtastgrenze bewirkt im betrachteten Beispiel eine Entlastung des ursprünglich stärker belasteten positiven Potentials $U_D^+$ der Gleichspannungsquelle. Dies ist einem Vergleich der im unteren Teil der FIG 18a und 18c dargestellten Schaltzustandssignalen SZPR für die Phase PR des Dreipunktwechselrichters zu entnehmen. Während im unteren Teil der FIG 18a die Flächen der positiven und negativen Schaltimpulse nahezu gleich sind, d.h. das positive und das negative Potential $U_D^+$ und $U_D^-$ im Mittel nahezu gleichmäßig auf den Ausgang der Phase PR durchgeschaltet werden, ist die Summe der positiven Schaltimpulse in FIG 18c erheblich kleiner als die der negativen Schaltimpulse. Der Vergleich der FIG 18a und 18c zeigt, daß zwar die gleiche Anzahl von positiven und negativen Impulsen mit übereinstimmenden zeitlichen Mittellinien auftreten. Dagegen haben die positiven bzw. negativen Impulse in der FIG 18c eine kleinere bzw. größere Fläche als die entsprechenden Impulse in der FIG 18a. Hierdurch ergibt sich erfindungsgemäß die vorübergehende stärkere Belastung des negativen Anschlusses $U_D^-$ der Gleichspannungsquelle zum Ausgleich einer vorangegangenen stärkeren Belastung des positiven Potentials $U_D^+$ .

In der FIG 17 ist diese weitere Ausgestaltung der erfindungsgemäßen Betriebsverfahren des Dreipunktwechselrichters wiederum in Form eines Blockschaltbildes als "Belastungsverteiler" BV dargestellt. Auch hier ist es wiederum von Vorteil, wenn ein zur Durchführung des Verfahrens aufgebauter Teilsystembildner TSB um die in der FIG 17 dargestellte Schaltung des erfindungsgemäßen Belastungsverteilers BV ergänzt ist. So ist es ohne weiteres möglich, den Belastungsverteiler BV den in der FIG 4, 7 bzw. 10 dargestellten Ausführungsformen eines Teilsystemsbildners TSB nachzuschalten. Die Ausgangssignale dieser Teilsystembildner werden dann dem Belastungsverteiler als Eingangssignale $U_{RO}'$ , $U_{SO}'$ , $U_{TO}'$ und $U_{RU}'$ , $U_{SU}'$ , $U_{TU}'$ zugeführt, während die Ausgangssignale SU des Belastungsverteilers $U_{RO}^*$ , $U_{SO}^*$ , $U_{TO}^*$ und $U_{RU}^*$ , $U_{SU}^*$ , $U_{TU}^*$ den Modulatoren MOS und MUS von FIG 1 als Eingangssignale zur weiteren Verarbeitung im Steuersatz zugeführt werden.

Gemäß der Darstellung von FIG 17 entspricht der zweite Korrekturwert KW2 dem bevorzugt über eine Glättungsglied HG geglätteten, bevorzugt normierten und zeitlich gemittelten Meßwert $i_{ZM}$ des Zwischenkreisstromes $i_Z$ . Mittels einer Summationsstelle S11 wird die Summe aus dem zweiten Korrekturwert und dem bevorzugt normierten halben Hub des Modulationssignales gebildet, mit der die Phasensignalverläufe des ersten Sollsignalsystems anschließend über Multiplizierer M11, M12, M13 bewertet werden. Entsprechend wird über eine weitere Summationsstelle S12 die Differenz aus dem halben Hub des Modulationssignales und dem zweiten Korrekturwert gebildet, und mittels der Multiplizierers M14, M15, M16 zur Bewertung der Phasensignalverläufe des zweiten Sollsignalsystems verwendet. Am Ausgang des Multiplizierers M11 bzw. M14 entstehen somit die in der FIG 18b beispielhaft dargestellten Phasensignalverläufe $U_{RO}''$ bzw. $U_{RU}''$ . Die derart korrigierten Phasensignalverläufe werden schließlich zur Bildung der Ausgangssignale des Belastungsverteilers BV in einem dritten Nullsystemaddierer NA3 um den zweiten Korrekturwert KW2 reduziert.

**Patentansprüche**

1. Verfahren zum Betrieb eines Dreipunktwechselrichters, wobei zur Bildung der Zündimpulse für die Ventile in den Phasen des Wechselrichters ein bevorzugt dreieckförmiges Modulationssignal (MS) zwei phasengleiche Sollsignalsysteme aus jeweils insbesondere sinusförmigen Phasensignalverläufen abtastet,wobei die Mittellinie (MLO) für die Phasensignalverläufe des ersten Sollsignalsystems gleich oder größer der Mittellinie (MLU) für die Phasensignalverläufe des zweiten Sollsignalsystems ist, und der Hub (2) des Modulationssignales jeweils eine bevorzugt normierte obere bzw. untere Abtastgrenze (+1,-1) vorgibt, **dadurch gekennzeichnet,** daß ein erster Abstandswert (AW1) zwischen dem aktuellen Maximalwert der Phasensignalverläufe und der oberen Abtastgrenze (+1), und ein zweiter Abstandswert (AW2) zwischen dem aktuellen Minimalwert der Phasensignalverläufe und der unteren Abtastgrenze (-1) gebildet wird, für die Dauer einer Überschreitung der oberen Abtastgrenze die Phasensignalverläufe des ersten Sollsignalsystems um den ersten Abstandswert (AW1) erniedrigt werden ($U_{RO}^*$, $U_{SO}^*$, $U_{TO}^*$), und für die Dauer einer Unterschreitung der unteren Abtastgrenze die Phasensignalverläufe des zweiten Sollsignalsystems um den zweiten Abstandswert (AW2) erhöht werden ($U_{RU}^*$, $U_{SU}^*$, $U_{TU}^*$) (Fig.5).

2. Verfahren nach Anspruch 1, **dadurch gekennzeichnet,** daß bei Unterschreitung der oberen Abtastgrenze (+1) die Phasensignalverläufe des ersten Sollsignalsystems um den ersten Abstandswert (AW1) erhöht, und bei Überschreitung der unteren Abtastgrenze (-1) die Phasensignalverläufe des zweiten Sollsignalsystems um den zweiten Abstandswert (AW2) erniedrigt werden (Fig.5 und 8) .

3. Verfahren nach Anspruch 1 oder 2, **dadurch gekennzeichnet,** daß wenn die Summe aus dem auf die jeweilige Mittellinie (MLO,MLU) bezogenen Betrag des aktuellen Maximalwertes (AKMA) und dem Betrag des aktuellen Minimalwertes (AKMI) der Phasensignalverläufe größer als der halbe Hub (1) des Modulationssignales (MS) ist, wird (B) die Differenz aus der Summe und dem halben Hub als ein erster Korrekturwert (KW1) auf diejenigen Phasensignalverläufe ($U_{RO}'$, $U_{RU}'$) im ersten bzw. zweiten Sollsignalsystem addiert ($U_{RO}'$) bzw. davon subtrahiert ($U_{RU}'$), welche weder den aktuellen Maximal- noch den Minimalwert im jeweiligen Sollsignalsystem bilden (MIO1) (FIG 10, 11a, 12a).

4. Verfahren nach Anspruch 3, **dadurch gekennzeichnet,** daß für die Dauer (B) einer Über- bzw. Unterschreitung des aktuellen Maximal- bzw. Minimalwertes ($U_{SO1}$bzw. $U_{TU1}$) aus den Phasensignalverläufen durch einen mit dem ersten Korrekturwert beaufschlagten Phasensignalverlauf ($U_{RO1}$ bzw. $U_{RU1}$) zur Begrenzung der Betrag der Über- bzw. Unterschreitung von dem entsprechenden Phasensignalverlauf im ersten Sollsignalsystem ($U_{RO1}$) subtrahiert ($U_{RO2}$) und zum korrespondierenden Phasensignalverlauf im zweiten Sollsignalsystem ($U_{RU1}$) addiert wird FIG 10, FIG 12b).

5. Verfahren zum Betrieb eines Dreipunktwechselrichters, wobei zur Bildung der Zündimpulse für die Ventile in den Phasen des Wechselrichters ein bevorzugt dreieckförmiges Modulationssignal (MS) zwei phasengleiche Sollsignalsysteme aus jeweils insbesondere sinusförmigen Phasensignalverläufen abtastet,wobei die Mittellinie (MLO) für die Phasensignalverläufe des ersten Sollsignalsystems gleich oder größer der Mittellinie (MLU) für die Phasensignalverläufe des zweiten Sollsignalsystems ist, und der Hub (2) des Modulationssignales jeweils eine bevorzugt normierte obere bzw. untere Abtastgrenze (+1,-1) vorgibt, **dadurch gekennzeichnet** daß von den mit dem Hub (2) des Modulationssignales (MS) bewerteten Phasensignalverläufen ($U_R^*$, $U_S^*$, $U_T^*$) des ersten und zweiten Sollsignalsystems jeweils der auf die jeweilige Mittellinie bezogene aktuelle Maximal- und Minimalwert aus den Phasensignalverläufen subtrahiert werden (MIO2), und durch Nullpunktsverschiebung (NP2) die Sollsignalsysteme gegebenenfalls so verändert werden, daß die Mittellinien (MLO bzw. MLU) der Phasensignalverläufe des ersten bzw. zweiten Sollsignalsystems mit der oberen bzw. unteren Abtastgrenze (+1 bzw. -1) übereinstimmen (FIG 15) .

6. Verfahren nach Anspruch 5, **dadurch gekennzeichnet** daß die Phasensignalverläufe auf die Werte der oberen bzw. unteren Abtastgrenze (+1 bzw. -1) begrenzt werden (BG2) (FIG.16).

7. Verfahren nach einem der vorangegangenen Ansprüche, wobei der Dreipunktwechselrichter von einer Gleichspannungsquelle ($U_D$) mit Mittenpotentialanschluß (MP) gespeist wird, **dadurch gekennzeichnet** daß zum Ausgleich einer unterschiedlichen Belastung des positiven ($U_D^+$) und des negativen ($U_D^-$) Potentials der Quelle ein von Vorzeichen und Betrag des in den Mittenpotentialanschluß (MP) fließenden, bevorzugt geglätteten Zwischenkreisstromes ($i_{ZM}$) abhängiger zweiter Korrekturwert (KW2) gebildet wird, die Istwerte der Phasensignalverläufe des ersten Sollsignalsystems ($U'_{RO}$, $U'_{SO}$, $U'_{TO}$) mit der Summe aus dem bevorzugt normierten halben Hub (1) des Modulationssignales (MS) und dem zweiten Korrekturwert bewertet werden (M11,M12,M13), die Istwerte der Phasensignalverläufe des zweiten Sollsignalsystems ($U'_{RU}$, $U'_{SU}$, $U'_{TU}$) mit der Differenz aus dem bevorzugt normierten halben Hub (1) des Modulationssignales (MS) und dem zweiten Korrekturwert bewertet werden (M14,M15,M16), und von den so bewerteten Phasensignalverläufen der zweite Korrekturwert subtrahiert (NA3) wird (FIG.17,18a,18b,18c).

## Claims

1. Method for the operation of a three-step inverter, whereby, for the formation of the ignition pulses for the valves in the phases of the inverter a preferably triangular modulation signal (MS) samples two cophasal desired signal systems from in each case in particular sinusoidal phase signal waveforms, whereby the centre line (MLO) for the phase signal waveforms of the first desired signal system is equal to or greater than the centre line (MLU) for the phase signal waveforms of the second desired signal system, and the deviation (2) of the modulation signal in each case specifies a preferably standardized upper or lower sampling limit (+1,-1),
characterized in that a first spacing value (AW1) is formed between the actual maximum value of the phase signal waveforms and the upper sampling limit (+1), and a second spacing value (AW2) is formed between the actual minimum value of the phase signal waveforms and the lower sampling limit (-1), for the duration of an exceeding of the upper sampling limit the phase signal waveforms of the first desired signal system are lowered by the first spacing value (AW1) ($U^*_{RO}$, $U^*_{SO}$, $U^*_{TO}$), and for the duration of a falling-short of the lower sampling limit the phase signal waveforms of the second desired signal system are increased by the second spacing value (AW2) ($U^*_{RU}$, $U^*_{SU}$, $U^*_{TU}$) (Figure 5).

2. Method according to claim 1,
characterized in that with the falling-short of the upper sampling limit (+1) the phase signal waveforms of the first desired signal system are increased by the first spacing value (AW1), and with the exceeding of the lower sampling limit (-1) the phase signal waveforms of the second desired signal system are lowered by the second spacing value (AW2) (Figures 5 and 8).

3. Method according to claim 1 or 2,
characterized in that if the sum of the magnitude of the actual maximum value (AKMA) and the magnitude of the actual minimum value (AKMI) of the phase signal waveforms, the magnitudes relating to the respective centre line (MLO,MLU), is greater than half the deviation (1) of the modulation signal (MS), the difference from the sum and half the deviation is added as a first correction value (KW1) to those phase signal waveforms ($U'_{RO}$, $U'_{RU}$) in the first or second desired signal system ($U'_{RO}$) which form neither the actual maximum value nor the minimum value in the respective desired signal system (MIO1), or are subtracted therefrom ($U'_{RU}$), (Figures 10, 11a, 12a).

4. Method according to claim 3,
characterized in that for the duration (B) of an exceeding or a falling-short of the actual maximum value or minimum value ($U_{SO1}$ or $U_{TU1}$) from the phase signal waveforms by means of a phase signal waveform ($U_{RO1}$ or $U_{RU1}$), which is loaded with the first correction value for limitation, the magnitude of the exceeding or falling-short of the appropriate phase signal waveform in the first desired signal system ($U_{RO1}$) is subtracted ($U_{RO2}$) and is added to the corresponding phase signal waveform in the second desired signal system ($U_{RU1}$) (Figure 10, Figure 12b).

5. Method for the operation of a three-step inverter, whereby, for the formation of the ignition pulses for the valves in the phases of the inverter a preferably triangular modulation signal (MS) samples two cophasal desired signal systems from in each case in particular sinusoidal phase signal waveforms, whereby the centre line (MLO) for the phase signal waveforms of the first desired signal system is equal to or greater than the centre line (MLU) for the phase signal waveforms of the second desired signal system, and the deviation (2) of the modulation signal in each cases specifies a preferably standardized upper or lower sampling limit (+1,-1), characterized in that in each case the actual maximum value and minimum value from the phase signal waveforms relating to the respective centre line are subtracted (MIO2) from the phase signal waveforms ($U^*_R$, $U^*_S$, $U^*_T$) of the first and second desired signal system evaluated with the deviation (2) of the modulation signal (MS), and by means of zero displacement (NP2) the desired signal systems are perhaps altered in such a way that the centre lines (MLO or MLU) of the phase signal waveforms of the first or second desired signal system correspond to the upper or lower sampling limit ( + 1 or -1) (Figure 15).

6. Method according to claim 5, characterized in that the phase signal waveforms are limited to the values of the upper or lower sampling limit ( + 1 or -1) (BG2) (Figure 16).

7. Method according to one of the preceding claims, whereby the three-step inverter is fed by a direct-voltage source ($U_D$) with centre potential connection (MP), characterized in that for the balancing of a differing loading of the positive ($U_D^+$) and of the negative ($U_D^-$) potential of the source a second correction value (KW2), dependent on sign and magnitude of the intermediate-circuit current ($i_{ZM}$) flowing into the centre potential connection (MP) and preferably smoothed, is formed, the actual values of the phase signal waveforms of the first desired signal system ($U_{RO}^{'}$, $U_{SO}^{'}$, $U_{TO}^{'}$) with the sum from half the deviation (1), preferably standardized, of the modulation signal (MS) and the second correction value are evaluated (M11,M12,M13), the actual values of the phase signal waveforms of the second desired signal system ($U_{RU}^{'}$, $U_{SU}^{'}$, $U_{TU}^{'}$) with the difference from half the deviation (1), preferably standardized, of the modulation signal (MS) and the second correction value are evaluated (M14,M15,M16), and the second correction value is subtracted (NA3) from the phase signal waveforms evaluated in this way (Figures 17,18a,18b,18c).

## Revendications

1. Procédé pour faire fonctionner un onduleur à trois niveaux, selon lequel pour la formation des impulsions d'amorçage pour les valves dans les phases de l'onduleur un signal de modulation (MS) de préférence triangulaire explore deux systèmes en phase de signaux de consigne à partir de variations respectives notamment sinusoïdales des signaux de phase, et selon lequel la ligne médiane (MLO) pour les variations des signaux de phase du premier système de signaux de consigne est située au même niveau ou à un niveau plus élevé que la ligne médiane (MLU) pour les variations des signaux de phase du second système de signaux de consigne, et l'excursion (2) du signal de modulation prédétermine respectivement une limite supérieure ou inférieure d'échantillonnage ( + 1, -1) de préférence normalisée, caractérisé par le fait qu'on forme une première valeur d'écart (AW1) entre la valeur maximale réelle des variations de signaux de phase et la limite d'échantillonnage supérieure ( + 1), et une seconde valeur d'écart (AW2) entre la valeur minimale réelle des variations des signaux de phase et la limite inférieure d'échantillonnage entre la valeur minimale réelle des variations des signaux de phase et la limite inférieure d'échantillonnage (-1) et que pendant la durée d'un dépassement par valeurs supérieures de la limite supérieure d'échantillonnage, les variations des signaux de phase du premier système de signaux de consigne sont réduites ($U^*_{RO}$, $U^*_{SO}$, $U^*_{TO}$) de la première valeur d'écart (AW1) et que pendant la durée d'un dépassement par valeurs inférieures de la limite inférieure d'échantillonnage, les variations des signaux de phase du second système de signaux de consigne sont accrues ($U^*_{RU}$, $U^*_{SU}$, $U^*_{TU}$) de la seconde valeur d'écart (AW2) (figure 5).

2. Procédé suivant la revendication 1, caractérisé par le fait que dans le cas du dépassement par valeurs inférieures de la limite supérieure d'échantillonnage ( + 1), les variations des signaux de phase du premier système de signaux de phase sont accrues de la première valeur d'écart (AW1), et que lors du dépassement par valeurs supérieures de la limite inférieure d'échantillonnage (-1), les variations du second système de signaux de consigne sont réduites de la seconde valeur d'écart (AW2) (figures 5 et 8).

3. Procédé suivant la revendication 1 ou 2, caractérisé par le fait que lorsque la somme de la valeur absolue, rapportée à la ligne médiane respective (MLO, MLU), de la valeur maximale actuelle (AKMA) et de la valeur absolue de la valeur minimale actuelle (AKMI) des variations des signaux de phase est supérieure à la moitié de l'excursion (1) du signal de modulation (MS), la différence entre la somme et la moitié de l'excursion est, en tant que première valeur de correction (KW1), additionnée ($U'_{RO}$) aux ou soustraite ($U'_{RU}$) des variations ($U'_{RO}$, $U'_{RU}$) des signaux de phase dans le premier ou le second système de signaux de consigne, qui ne forment (MIO1) ni la valeur maximale actuelle, ni la valeur minimale dans le système respectif de signaux de consigne (figures 10, 11a, 12a).

**4.** Procédé suivant la revendication 3, caractérisé par le fait que pendant la durée (B) d'un dépassement par valeurs supérieures ou d'un dépassement par valeurs inférieures de la valeur maximale actuelle ou de la valeur minimale actuelle ($U_{SO1}$ ou $U_{TU1}$) tirée des variations des signaux de phase, par une variation d'un signal de phase ($U_{RO1}$ ou $U_{RU1}$) chargée avec la première valeur de correction, pour la limitation, la valeur absolue du dépassement par valeurs supérieures ou par valeurs inférieures est soustraite ($U_{O2}$) de la variation correspondante du signal de phase dans le premier système de signaux de consigne ($U_{RO1}$) et est ajouté à la variation correspondante du signal de phase dans le second système de signaux de consigne ($U_{RU1}$) (figures 10, 12b).

**5.** Procédé pour faire fonctionner un onduleur à trois niveaux, selon lequel pour la formation des impulsions d'amorçage pour les valves dans les phases de l'onduleur un signal de modulation (MS) de préférence triangulaire explore deux systèmes en phase de signaux de consigne à partir de variations respectives notamment sinusoïdales des signaux de phase, et selon lequel la ligne médiane (MLO) pour les variations des signaux de phase du premier système de signaux de consigne est située au même niveau ou à un niveau plus élevé que la ligne médiane (MLU) pour les variations des signaux de phase du second système de signaux de consigne, et l'excursion (2) du signal de modulation prédétermine respectivement une limite supérieure ou inférieure d'échantillonnage (+1, -1) de préférence normalisée, caractérisé par le fait que respectivement la valeur maximale et la valeur minimale actuelles, rapportées à la ligne médiane respective, formées à partir des variations ($U^*_R$, $U^*_S$, $U^*_T$) des signaux de phase, évaluées au moyen de l'excursion (2) du signal de modulation (MS), des premier et second systèmes de signaux de consigne est soustraite (MIO2) des variations des signaux de phase, et les systèmes de signaux de consigne sont éventuellement modifiés au moyen d'un décalage (NP2) du point zéro, de telle sorte que les lignes médianes (MLO ou MLU) des variations des signaux de phase des premier et second systèmes de signaux de consigne coïncident avec les limites supérieure et inférieure d'échantillonnage (+1 et -1) (figure 15).

**6.** Procédé suivant la revendication 5, caractérisé par le fait que les variations des signaux de phase sont limitées (BG2) aux valeurs des limites supérieure et inférieure d'échantillonnage (+1 ou -1).

**7.** Procédé suivant l'une des revendications précédentes, selon lequel l'onduleur à trois niveaux est alimenté par une source de tension continue ($U_D$) possédant une borne (MP) d'application du potentiel moyen, caractérisé par le fait que pour la compensation d'une charge différente du potentiel positif ($U^+_D$) et du potentiel négatif ($U^-_D$) de la source, qui dépend du signe et de la valeur absolue du courant ($i_{ZM}$) du circuit intermédiaire, qui circule dans la borne (MP) de raccordement du potentiel moyen et est de préférence lissé, que les valeurs réelles des variations des signaux de phase du premier système de signaux de consigne ($U'_{RO}$, $U'_{SO}$, $U'_{TO}$) sont évaluées (M11, M12, M13) avec la somme de la moitié de l'excursion (1), de préférence normalisée, du signal de modulation (MS) et de la seconde valeur de correction, que les valeurs réelles des variations des signaux de phase du second système de signaux de consigne ($U'_{RU}$, $U'_{SU}$, $U'_{TU}$) sont évaluées (M14, M15, M16) avec la différence entre la moitié de l'excursion (1), de préférence normalisée, du signal de modulation (MS) et la seconde valeur de correction, et que la seconde valeur de correction est soustraite (NA3) des variations ainsi évaluées des signaux de phase (figures 17, 18a, 18b, 18c).

FIG 1

FIG 2

FIG 3

FIG 4

FIG 5

FIG 6

FIG 7

FIG 8

FIG 9

FIG 10

FIG 11a

FIG 11b

FIG 12a

FIG 12b

FIG 13

FIG 14

FIG 15

FIG 16

FIG 17

FIG 18a

FIG 18b

FIG 18c

EP 0 356 547 B1